(19) Europäisches Patentamt
European Patent Office
Office européen des brevets

(11) **EP 4 742 576 A1**

(12) **EUROPEAN PATENT APPLICATION**
published in accordance with Art. 153(4) EPC

(43) Date of publication:
**13.05.2026 Bulletin 2026/20**

(21) Application number: **23944038.1**

(22) Date of filing: **05.07.2023**

(51) International Patent Classification (IPC):
**H04L 5/00** (2006.01)  **H04W 72/0446** (2023.01)

(52) Cooperative Patent Classification (CPC):
**H04L 5/00; H04W 72/0446**

(86) International application number:
**PCT/CN2023/105946**

(87) International publication number:
**WO 2025/007307 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **LIU, Zhe
Dongguan, Guangdong 523860 (CN)**

(74) Representative: **Mewburn Ellis LLP
Aurora Building
Counterslip
Bristol BS1 6BX (GB)**

(54) **SIGNAL TRANSMISSION METHOD AND DEVICE**

(57)    The disclosure relates to a signal transmission method and a device. The signal transmission method includes the following. A terminal device transmits a phase-tracking reference signal (PTRS), where a number of transmission layers associated with a PTRS port is less than or equal to a number of transmission layers of a discrete Fourier transform-spread-orthogonal frequency division multiplexing (DFT-S-OFDM) waveform physical uplink shared channel (PUSCH), and the number of transmission layers of the DFT-S-OFDM waveform PUSCH is greater than or equal to 2. With embodiments of the disclosure, when transmitting a PTRS, the terminal device can support mapping in multi-layer PUSCH transmission when the number of transmission layers of the DFT-S-OFDM waveform PUSCH is greater than or equal to 2.

200

S210

A TERMINAL DEVICE TRANSMITS A PTRS, WHERE A NUMBER OF TRANSMISSION LAYERS ASSOCIATED WITH A PTRS PORT IS LESS THAN OR EQUAL TO A NUMBER OF TRANSMISSION LAYERS OF A DFT-S-OFDM WAVEFORM PUSCH, AND THE NUMBER OF TRANSMISSION LAYERS OF THE DFT-S-OFDM WAVEFORM PUSCH IS GREATER THAN OR EQUAL TO 2

FIG. 2

## Description

TECHNICAL FIELD

The disclosure relates to the field of communications, and more specifically, to a signal transmission method, a terminal device, and a network device.

BACKGROUND

In new radio (NR) technologies, a phase-tracking reference signal (PTRS or PT-RS) is typically used to estimate a phase noise, and the estimated phase noise is used to compensate for phase noise errors, thereby improving communication quality. Related technologies support mapping a PTRS to a physical uplink shared channel (PUSCH) with a discrete Fourier transform-spread-orthogonal frequency division multiplexing (DFT-S-OFDM) waveform or a cyclic prefix orthogonal frequency division multiplexing (CP-OFDM) waveform. For the DFT-S-OFDM waveform, existing technologies only map the PTRS in single-layer PUSCH transmission, and there is no solution for mapping the PTRS in multi-layer transmission.

SUMMARY

Embodiments of the disclosure provide a signal transmission method and a device, which maps a phase-tracking reference signal (PTRS) in multi-layer PUSCH transmission when the number of transmission layers of a discrete Fourier transform-spread-orthogonal frequency division multiplexing (DFT-S-OFDM) waveform PUSCH is greater than or equal to 2.

Embodiments of the disclosure provide a signal transmission method. The method includes the following. A terminal device transmits a PTRS, where a number of transmission layers associated with a PTRS port is less than or equal to a number of transmission layers of a DFT-S-OFDM waveform physical uplink shared channel (PUSCH), and the number of transmission layers of the DFT-S-OFDM waveform PUSCH is greater than or equal to 2.

Embodiments of the disclosure provide a signal transmission method. The method includes the following. A network device receives a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

Embodiments of the disclosure provide a terminal device. The terminal device includes a first transmitting unit. The first transmitting unit is configured to transmit a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

Embodiments of the disclosure provide a network device. The network device includes a second receiving unit. The second receiving unit is configured to receive a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

Embodiments of the disclosure provide a terminal device. The terminal device includes a transceiver, a memory configured to store computer programs, and a processor configured to invoke and execute the computer programs stored in the memory and control the transceiver, to cause the terminal device to perform the signal transmission method.

Embodiments of the disclosure provide a network device. The network device includes a transceiver, a memory configured to store computer programs, and a processor configured to invoke and execute the computer programs stored in the memory and control the transceiver, to cause the network device to perform the signal transmission method.

Embodiments of the disclosure provide a chip configured to perform the signal transmission method. Specifically, the chip includes a processor configured to invoke and execute computer programs stored in a memory, to cause a device equipped with the chip to perform the signal transmission method.

Embodiments of the disclosure provide a computer-readable storage medium configured to storing computer programs which, when executed by a device, cause the device to perform the signal transmission method.

Embodiments of the disclosure provide a computer program product including computer program instructions which are operable with a computer to perform the signal transmission method.

Embodiments of the disclosure provide a computer program which, when executed on a computer, cause the computer to perform the signal transmission method.

With embodiments of the disclosure, when transmitting a PTRS, the terminal device can support mapping in multi-layer PUSCH transmission when the number of transmission layers of the DFT-S-OFDM waveform PUSCH is greater than or equal to 2.

BRIEF DESCRIPTION OF THE DRAWINGS

FIG. 1 is a schematic diagram of an application scenario according to embodiments of the disclosure.

FIG. 2 is a schematic flowchart of a signal transmission method 200 according to an embodiment of the disclosure.

FIG. 3A is a schematic diagram of a mapping relationship according to embodiment 1 of the disclosure.

FIG. 3B is a schematic diagram of another mapping relationship according to embodiment 1 of the disclosure.

FIG. 3C is a schematic diagram of another mapping relationship according to embodiment 1 of the disclosure.

FIG. 4A is a schematic diagram of a mapping relationship according to embodiment 2 of the disclosure.

FIG. 4B is a diagram of an example where different PTRS ports have the same PTRS group pattern.

FIG. 4C is a diagram of an example where different PTRS ports have different PTRS group patterns.

FIG. 5A is a schematic diagram of a mapping relationship according to embodiment 3 of the disclosure.

FIG. 5B is a diagram of an example where different PTRS ports have the same PTRS group pattern.

FIG. 5C is a diagram of an example where different PTRS ports have different PTRS group patterns.

FIG. 6 is a schematic diagram of a mapping relationship according to embodiment 4 of the disclosure.

FIG. 7A is a schematic diagram of a mapping relationship according to embodiment 5 of the disclosure.

FIG. 7B is a schematic diagram of another mapping relationship according to embodiment 5 of the disclosure.

FIG. 8 is a schematic flowchart of a signal transmission method 800 according to an embodiment of the disclosure.

FIG. 9A is a schematic block diagram of a terminal device according to an embodiment of the disclosure.

FIG. 9B is a schematic block diagram of a terminal device according to another embodiment of the disclosure.

FIG. 10A is a schematic block diagram of a network device according to an embodiment of the disclosure.

FIG. 10B is a schematic block diagram of a network device according to another embodiment of the disclosure.

FIG. 11 is a schematic structural diagram of a communication device 1100 according to embodiments of the disclosure.

FIG. 12 is a schematic structural diagram of a chip 1200 according to embodiments of the disclosure.

FIG. 13 is a schematic block diagram of a communication system 1300 according to embodiments of the disclosure.

DETAILED DESCRIPTION

The following will describe technical solutions of embodiments of the disclosure with reference to the accompanying drawings.

The technical solutions of embodiments of the disclosure are applicable to various communication systems, for example, a global system of mobile communication (GSM), a code division multiple access (CDMA) system, a wideband code division multiple access (WCDMA) system, a general group radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (Wi-Fi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, vehicle to everything (V2X) communication, etc. Embodiments of the disclosure can also be applied to these communication systems.

In an implementation, a communication system in embodiments of the disclosure may be applied to a carrier aggregation (CA) scenario, a dual connectivity (DC) scenario, or a standalone (SA) network deployment scenario.

In an implementation, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Embodiments of the disclosure have been described in connection with the network device and the terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In embodiments of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In embodiments of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device or a g-Node B (gNB) in the NR network, a network device in the future evolved PLMN, or a network device in the NTN network, etc.

By way of explanation rather than limitation, in embodiments of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In embodiments of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

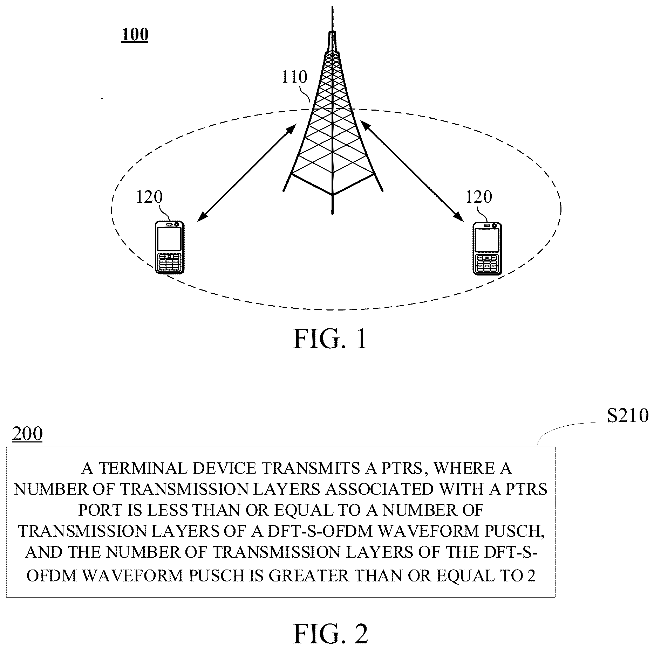

FIG. 1 exemplarily illustrates a communication system 100. The communication system includes one network device 110 and two terminal devices 120. In an implementation, the communication system 100 may include multiple network devices 110, there may be other numbers of terminal devices 120 in the coverage of each network device 110, and embodiments of the disclosure are not limited in this regard.

In an implementation, the communication system 100 may further include other network entities, such as a mobility management entity (MME) and an access and mobility management function (AMF), and embodiments of the disclosure are not limited in this regard.

The network device may include an access network device and a core network device. That is, the wireless communication system also includes multiple core networks for communication with the access network device. The access network device may be an evolutional node B ("eNB" or "e-NodeB" for short), a macro base station, a micro base station, (also referred to as "small base station"), a pico base station, an access point (AP), a transmission point (TP), or a new generation Node B (gNodeB), and the like in an LTE system, a next generation mobile communication system, a next radio (NR) system, or an authorized auxiliary access long-term evolution (LAA-LTE) system.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, technologies related to embodiments of the disclosure will be elaborated below. The following related art as an optional scheme can be arbitrarily combined with the technical solutions of embodiments of the disclosure, which shall all belong to the protection scope of embodiments of the disclosure.

1. Phase-tracking reference signal (PT-RS) when transform precoding is not enabled (i.e., the waveform is CP-OFDM)

The PT-RS is used to track phase noise caused by local oscillators in a base station and a UE. The phase noise corrupts the orthogonality of subcarriers in an OFDM system, which causes a common phase error (CPE). The CPE has a great impact on system performance. Therefore, compensation for CPE is considered in NR. When the waveform is CP-OFDM, mapping information of the PTRS mainly includes the following.

(1) Time density of PT-RS

The density of the PT-RS in the time domain depends on the quality of link transmission. When the link channel condition is good, fewer PT-RS symbols may be used to complete phase estimation. When the link channel condition is poor, more PT-RS symbols are required to complete phase estimation. As illustrated in Table 1, the time density of the PT-RS is related to a modulation and coding scheme (MCS) level. The PT-RS may be not present, or may be transmitted every symbol, every 2 symbols, or every 4 symbols.

Table 1

| Scheduled MCS | Time density ($L_{PT-RS}$) |
|---|---|
| $I_{MCS}$ < ptrs-MCS$_1$ | PT-RS is not present |
| ptrs-MCS 1 $\leq$ $I_{MCS}$ < ptrs-MCS2 | 4 |
| ptrs-MCS2 $\leq$ $I_{MCS}$ < ptrs-MCS3 | 2 |
| ptrs-MCS3 $\leq$ $I_{MCS}$ < ptrs-MCS4 | 1 |

ptrs-MCS$_1$, ptrs-MCS$_2$, and ptrs-MCS$_3$ are configured via time density (*timeDensity*) in radio resource control (RRC) parameter uplink configuration (*PTRS-UplinkConfig*). ptrs-MCS$_4$ is not explicitly configured via an RRC signaling. The value of ptrs-MCS$_4$ is determined as 29 or 28 according to the MCS table used. For example, the second row in Table 1 indicates that when the scheduled MCS is greater than or equal to ptrs-MCS$_1$ and less than ptrs-MCS$_2$, the time density of the PT-RS is 4, that is, the PT-RS is present once every 4 OFDM symbols.

If *timeDensity* is not configured, the time density is 1, that is, the PT-RS is present once every symbol.

(2) Frequency density of PT-RS

In the frequency domain, the PT-RS may be transmitted in every resource block (RB), or every 2 RBs, or every 4 RBs. As illustrated in the table below, the frequency density of the PT-RS is related to a scheduled bandwidth.

Table 2

| Scheduled bandwidth | Frequency density ($K_{PT-RS}$) |
|---|---|
| $N_{RB} < N_{RB0}$ | PT-RS is not present |
| $N_{RB0} \leq N_{RB} < N_{RB1}$ | 2 |
| $N_{RB1} \leq N_{RB}$ | 4 |

$N_{RB0}$, $N_{RB1}$, and the scheduled bandwidth $N_{RB}$ are configured via frequency density (*frequencyDensity*) in RRC parameter *PTRS-UplinkConfig*. For example, in the second row of the table, when the scheduled bandwidth $N_{RB}$ is greater than or equal to $N_{RB0}$ and less than $N_{RB1}$, the frequency density of the PT-RS is 2.

If *frequencyDensity* is not configured, the frequency density is 2, that is, the PT-RS is transmitted once every 2 RBs.

(3) PT-RS port

The number of PT-RS ports is related to the number of phase noise sources. When there are multiple independent phase noise sources, each phase noise source requires a PT-RS port for phase estimation.

For a PT-RS of a PUSCH, one or two PT-RS ports may be configured for uplink, and the number of PT-RS ports is configured via an RRC signaling.

The actual number of PT-RS ports may be determined as follows. For codebook-based PUSCH transmission, the number of PT-RS ports for a full coherent codebook is 1, and the actual number of PT-RS ports for a partial coherent codebook and a non-coherent codebook is determined according to a precoding matrix of uplink transmission and the number of transmission layers. The number of PT-RS ports may be 1 or 2. For example, for 4 ports for uplink, the number of transmission layers is 4, and when TPMI = 1 or 2, the uplink codebook is a partial coherent codebook as follows. As can be seen from codebooks indicated by the TPMI, SRS port 0 and SRS port 2 have the same phase noise, while SRS port 1 and SRS port 3 have the same phase noise, transmission layer 0 and transmission layer 1 share the same SRS port, and transmission layer 2 and transmission layer 3 share the same SRS port. Assuming that the SRS port is i (i=0, 1, 2, 3), and the port for PUSCH transmission is 1000+I, thus, it is specified in protocols that PT-RS port 0 is associated with PUSCH port 1000 and PUSCH port 1002, and PT-RS port 1 is associated with PUSCH port 1001 and PUSCH port 1003.

For non-codebook based PUSCH transmission, according to port indexes of PT-RSs configured for n SRS resources associated with a PUSCH, the same PT-RS port index corresponds to the same PT-RS port, and there are at most 2 PT-RS ports with different port indexes.

(4) REs occupied by PT-RS

Since a DMRS port associated with the PT-RS occupies multiple subcarriers in one RB, the PT-RS occupies one of the subcarriers, it is necessary to indicate that the PT-RS is mapped to a subcarrier of the DMRS port. The NR uses a combination of implicit mapping and explicit indication. Table 3 below illustrates a mapping between different DMRS ports and corresponding PT-RS subcarriers. When the resource element offset state configured via a higher-layer RRC signaling is state '01', '10', or '11', for a certain DMRS port, the subcarrier for PT-RS transmission may be determined. When the higher-layer parameter is not configured, the subcarrier corresponding to state '00' is used by default.

Table 3

| DM-RS antenna port | $k_{r, f}^{RE}$ | | | | | | | |
|---|---|---|---|---|---|---|---|---|
| | DM-RS Configuration type 1 | | | | DM-RS Configuration type 2 | | | |
| | *Resource element offset* | | | | *Resource element offset* | | | |
| $\bar{p}$ | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |

As illustrated in Table 3, for example, if the PT-RS is associated with DMRS port 1, and the higher-layer signaling indicates that the resource element offset is '01', the PT-RS occupies subcarrier 4 for transmission.

2. Introduction of PTRS when transform precoding is enabled (i.e., the waveform is discrete Fourier transform-spread-orthogonal frequency division multiplexing (DFT-S-OFDM))

When the waveform is DFT-S-OFDM, the mapping information of the PTRS mainly includes the following.

(1) Time density of PT-RS

For the DFT-S-OFDM waveform, determination of the time density of the PTRS is similar to that of CP-OFDM waveform. The network device configures the time density as 2 via a higher-layer parameter RRC signaling *time-DensityTransformPrecoding,* that is, the PTRS is mapped once every two symbols. If the higher-layer parameter is not configured, the PTRS is mapped once every symbol.

(2) Mapping pattern of PT-RS

For the DFT-S-OFDM waveform, the mapping rule of the frequency density of the PTRS is very different from that of CP-OFDM waveform. For the DFT-S-OFDM waveform, the mapping of the PTRS is related to the scheduled bandwidth within the BWP, and the PTRS group pattern includes PTRS groups, each group includes multiple PTRS samples, which is configured via a higher-layer parameter RRC signaling *sampleDensity.* As illustrated in Table 4 below, within different scheduled bandwidth ranges, the number of PTRS groups and the number of samples in each group may be different.

Table 4

| Scheduled bandwidth | Number of PTRS groups | Number of samples in each PTRS group |
|---|---|---|
| *NRB0 <NRB < NRB1* | 2 | 2 |
| *NRB1 ≤ NRB < NRB2* | 2 | 4 |
| *NRB2 ≤ NRB < NRB3* | 4 | 2 |
| *NRB3 ≤ NRB < NRB4* | 4 | 4 |
| *NRB4 ≤NRB* | 8 | 4 |

The mapping position of the PTRS on OFDM symbol *l* is related to PTRS groups, the number of PTRS samples in each PTRS group, and the scheduled bandwidth of the PUSCH, as illustrated in Table 5.

Table 5

| Number of PTRS groups | Number of samples in each PTRS group | Index m of the PTRS sample on OFDM symbol $l$ |
|---|---|---|
| 2 | 2 | $s\lfloor M_{sc}^{PUSCH}/4\rfloor + k - 1$ <br> where $s = 1,3$ and $k = 0,1$ |
| 2 | 4 | $sM_{sc}^{PUSCH} + k$ where $\begin{cases} s = 0 & \text{and} & k = 0,1,2,3 \\ s = 1 & \text{and} & k = -4,-3,-2,-1 \end{cases}$ |
| 4 | 2 | $\lfloor s\,M_{sc}^{PUSCH}/8\rfloor + k - 1$ <br> where $s = 1,3,5,7$ and $k = 0,1$ |
| 4 | 4 | $sM_{sc}^{PUSCH}/4 + n + k;$ <br> where <br> $\begin{cases} s = 0 & \text{and} & k = 0,1,2,3 & n = 0 \\ s = 1,2 & \text{and} & k = -2,-1,0,1 & n = \lfloor M_{sc}^{PUSCH}/8\rfloor \\ s = 4 & \text{and} & k = -4,-3,-2,-1 & n = 0 \end{cases}$ |
| 8 | 4 | $\lfloor s\,M_{sc}^{PUSCH}/8\rfloor + n + k;$ <br> where <br> $\begin{cases} s = 0 & \text{and} & k = 0,1,2,3 & n = 0 \\ s = 1,2,3,4,5,6 & \text{and} & k = -2,-1,0,1 & n = \lfloor M_{sc}^{PUSCH}/16\rfloor \\ s = 8 & \text{and} & k = -4,-3,-2,-1 & n = 0 \end{cases}$ |

In Table 5, $M_{sc}^{PUSCH}$ indicates the scheduled bandwidth for PUSCH transmission, that is, the total number of subcarriers.

For the DFT-S-OFDM waveform, to maintain single-carrier characteristics, only single-layer PUSCH transmission can be scheduled for the uplink PUSCH. For the CP-OFDM waveform, multi-layer PUSCH transmission can be supported. Multi-layer uplink transmission for the CP-OFDM waveform can improve system capacity. However, the application scenario of multi-layer uplink transmission for the DFT-S-OFDM waveform differ from that of multi-layer uplink transmission for the CP-OFDM waveform. Multi-layer uplink transmission for the DFT-S-OFDM waveform can improve uplink coverage and throughput. Therefore, introducing multi-layer uplink transmission for the DFT-S-OFDM waveform can improve uplink transmission performance.

In NR, a phase-tracking reference signal (PTRS) is typically used to estimate a phase noise, and the estimated phase noise is used to compensate for phase noise errors, thereby improving communication quality. Existing technologies support mapping a PTRS to a CP-OFDM waveform or a DFT-S-OFDM waveform. For the DFT-S-OFDM waveform, existing technologies only map the PTRS in single-layer PUSCH transmission, and there is no solution for mapping the PTRS in multi-layer transmission.

FIG. 2 is a schematic flowchart of a signal transmission method 200 according to an embodiment of the disclosure. Optionally, the method may be applied to the system illustrated in FIG. 1, but is not limited thereto. The method includes at least part of the following.

S210. A terminal device transmits a PTRS, where a number of transmission layers associated with a PTRS port is less than or equal to a number of transmission layers of a DFT-S-OFDM waveform physical uplink shared channel (PUSCH), and the number of transmission layers of the DFT-S-OFDM waveform PUSCH is greater than or equal to 2.

For a case where the number of transmission layers of the DFT-S-OFDM waveform PUSCH is greater than or equal to 2, the number of transmission layers associated with the PTRS port of the terminal device is less than or equal to the number of transmission layers of the DFT-S-OFDM waveform PUSCH, thereby solving the problem of mapping the PTRS in multi-layer DFT-S-OFDM waveform PUSCH transmission.

Before transmitting the PTRS, the terminal device may determine mapping information of the PTRS according to first information or a predefined rule, then map the PTRS according to the mapping information of the PTRS and transmit the PTRS. The first information may be indicated to the terminal device by a network device through an RRC signaling, a MAC CE, or a DCI.

In some implementations, the mapping information of the PTRS includes at least one of: PTRS port number information; a transmission layer associated with a PTRS port; a mapping layer of a PTRS port; time density information of the PTRS corresponding to a mapping layer of a PTRS port; or a mapping pattern of the PTRS corresponding to a mapping layer of a PTRS port.

For example, the mapping information of the PTRS includes: when transmitting the PTRS, the number of PTRS ports used by the terminal device, a transmission layer associated with each PTRS port, a mapping layer of each PTRS port, or time density information and a mapping pattern of the PTRS corresponding to each mapping layer of each PTRS port.

In some implementations, the number of transmission layers associated with one PTRS port is greater than or equal to 1. For example, one PTRS port can be associated with 1, 2, or more transmission layers.

The mapping pattern of the PTRS corresponding to the mapping layer of the PTRS port may include a PTRS group pattern at the mapping layer of the PTRS port and other mapping information in the frequency domain.

In some examples, the PTRS group pattern at the mapping layer of the PTRS port may include at least one of: a PTRS group corresponding to the mapping layer of the PTRS port; a number of PTRS samples included in a PTRS group; or a mapping position of a PTRS sample.

For example, the PTRS group pattern at the mapping layer of the PTRS port includes: a PTRS group or PTRS groups corresponding to each mapping layer of the PTRS port, the number of PTRS samples included in each PTRS group, or the mapping position of each PTRS sample at the corresponding mapping layer.

In some embodiments, the first information includes a precoding information and number of layers (TPMI) and/or a maximum number of PTRS ports, and PTRS port number information may be determined by the terminal device according to the TPMI and/or the maximum number of PTRS ports. For example, the terminal device may determine that the number of PTRS ports is greater than or equal to one, for example, there is 1, 2, or 4 PTRS ports.

In some implementations, the terminal device may determine the time density information of the PTRS corresponding to the mapping layer of the PTRS port according to a time density in the first information or the predefined rule, for example, determine a symbol where the PTRS is transmitted in the time domain.

In some embodiments, the terminal device may determine the mapping pattern of the PTRS corresponding to the mapping layer of the PTRS port according to a mapping pattern in the first information or the predefined rule, for example, determine at least one of: the PTRS group corresponding to each PTRS mapping layer, the number of PTRS samples included in each group, or the mapping position of each PTRS sample.

According to the relationship between the mapping layer of the PTRS port and the transmission layer associated with the PTRS port, the PTRS mapping manner in embodiments of the disclosure can be classified into the following two types.

(I) The first type: the number of mapping layers of the PTRS port is less than the number of transmission layers associated with the PTRS port, that is, the PTRS is mapped to part of the transmission layers associated with the PTRS.

For example, for a DFT-S-OFDM waveform, the number of transmission layers of a PUSCH is L, the number of transmission layers associated with one PTRS port is L1, and the number of transmission layers mapped to the PTRS port is L2. L is an integer greater than 1, L1 is an integer less than or equal to L, and L2 is an integer less than L1. In this example, when the number of transmission layers associated with one PTRS port is greater than 1, the number of transmission layers mapped to the PTRS port (that is, mapping layers of the PTRS port) is less than the number of transmission layers associated with the port.

(ii) The second type: the number of mapping layers of the PTRS port is equal to the number of transmission layers associated with the PTRS port, that is, the PTRS is mapped to all of the transmission layers associated with the PTRS.

For example, for a DFT-S-OFDM waveform, the number of transmission layers of a PUSCH is L, the number of transmission layers associated with one PTRS port is L3, and the number of transmission layers mapped to the PTRS port is also L3. L is an integer greater than 1, and L3 is an integer less than or equal to L. In this example, the number of transmission layers mapped to one PTRS port (that is, mapping layers of the PTRS port) is equal to the number of transmission layers associated with the PTRS port.

PTRS patterns at all transmission layers mapped to one PTRS port may be the same or different.

The following are specific embodiments to introduce the above two types of PTRS mapping manners in detail.

Embodiment 1

This embodiment belongs to the first type described above, that is, the number of mapping layers of the PTRS port is less than the number of transmission layers associated with the PTRS port, and the PTRS is mapped to part of the transmission layers associated with the PTRS. In this embodiment, for a DFT-S-OFDM waveform, when the number of transmission layers of the PUSCH associated with one PTRS port is greater than 1, only one of the transmission layers is mapped to the PTRS, and the other transmission layers are not mapped to the PTRS.

In this case, the mapping layers of one PTRS port can be a subset of the transmission layers associated with the PTRS port. For example, the transmission layers associated with one PTRS port includes transmission layer 1 and transmission layer 2, and the mapping layer of the PTRS port can be transmission layer 1 or transmission layer 2.

The terminal device may determine a mapping layer of one PTRS port from the transmission layers associated with the PTRS port according to the predefined rule or the first information, where the first information or other information may be transmitted in advance by a network device to the terminal device.

For example, the mapping layer of each PTRS port may be determined according to the first information or the predefined rule. Both the network device and the terminal device determine the mapping layer of each PTRS port according to the predefined rule.

In some implementations, the first information or the predefined rule may specify one or more transmission layers with a smallest index among the transmission layers associated with the PTRS port as a mapping layer of the PTRS port.

For example, the predefined rule predefines that the mapping layer of each PTRS port is the first transmission layer among the transmission layers associated with the PTRS port, or the first information specifies that the mapping layer of each PTRS port is the first transmission layer among the transmission layers associated with the PTRS port. The first transmission layer may be one or more transmission layers with the smallest transmission layer index. In this case, the terminal device and the network device may determine the transmission layer with the smallest index from the transmission layers associated with each PTRS port as the mapping layer of the PTRS port.

In some implementations, the mapping layer of one PTRS port is determined according to the first information. The first information may be carried in a DCI. For example, the first information is a PTRS-DMRS association field in the DCI. The mapping layer of one PTRS port is determined according to the association between the PTRS port and a DMRS port.

For example, one PTRS port (PTRS port 0) is mapped to four transmission layers. When the state value of the PTRS-DMRS association field is 0, the PTRS port is associated with the first scheduled DMRS port, which can be understood as PTRS port 0 being mapped to the first transmission layer, when the state value of the PTRS-DMRS association field is 1, the PTRS port is associated with the second scheduled DMRS port, which can be understood as PTRS port 0 being mapped to the second transmission layer, when the state value of the PTRS-DMRS association field is 2, the PTRS port is associated with the third scheduled DMRS port, which can be understood as PTRS port 0 being mapped to the third transmission layer, and when the state value of the PTRS-DMRS association field is 3, the PTRS port is associated with the fourth scheduled DMRS port, which can be understood as PTRS port 0 being mapped to the fourth transmission layer, as illustrated in Table 6.

Table 6

| State value | DMRS port |
|---|---|
| 0 | The first scheduled DMRS port |
| 1 | The second scheduled DMRS port |
| 2 | The third scheduled DMRS port |
| 3 | The fourth scheduled DMRS port |

For another example, one PTRS port (PTRS port 0) is mapped to two transmission layers, i.e., PTRS port 0 is mapped to transmission layer 1 and transmission layer 2, and PTRS port 1 is mapped to transmission layer 3 and transmission layer 4. When the state value of the high-order bit of the PTRS-DMRS association field is 0, the PTRS port is associated with the first scheduled DMRS port, which can be understood as PTRS port 0 being mapped to transmission layer 1, when the state value of the high-order bit of the PTRS-DMRS association field is 1, the PTRS port is associated with the second scheduled DMRS port, which can be understood as PTRS port 0 being mapped to transmission layer 2, when the state value of the low-order bit of the PTRS-DMRS association field is 0, the other PTRS port is associated with the first scheduled DMRS port, which can be understood as PTRS port 1 being mapped to transmission layer 3, and when the state value of the low-order bit of the PTRS-DMRS association field is 1, the other PTRS port is associated with the second scheduled DMRS port, which can be understood as PTRS port 1 being mapped to transmission layer 4, which is as illustrated in Table 7.

Table 7

| State value of high-order bit | DMRS port | | State value of low-order bit | DMRS port |
|---|---|---|---|---|
| 0 | The first scheduled DMRS port associated with PTRS port 0 | | 0 | The first scheduled DMRS port associated with PTRS port 1 |
| 1 | The second scheduled DMRS port associated with PTRS port 0 | | 1 | The second scheduled DMRS port associated with PTRS port 1 |

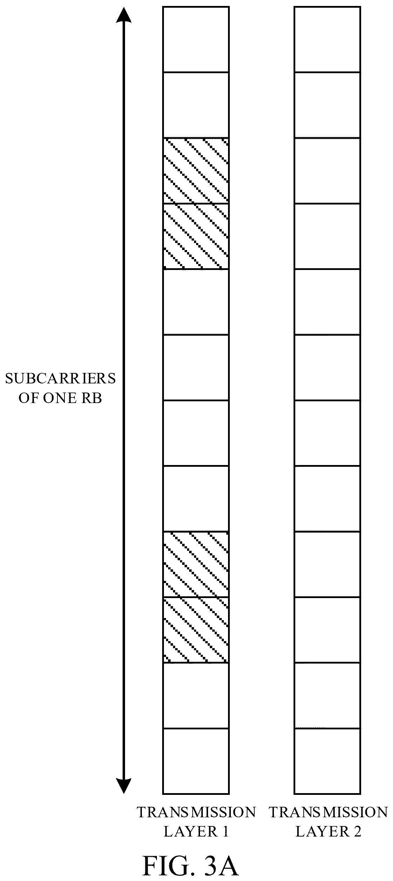

FIG. 3A is a schematic diagram of a mapping relationship according to embodiment 1 of the disclosure.

In FIG. 3A, one PTRS port is involved.

As illustrated in FIG. 3A, the number of transmission layers of the PUSCH is 2, and the transmission layers of the PUSCH include transmission layer 1 and transmission layer 2. PTRS port 0 is associated with two transmission layers, and the mapping layer of PTRS port 0 is the first transmission layer associated with PTRS port 0.

In FIG. 3A, PTRS port 0 includes two PTRS groups, and each PTRS group includes two PTRS samples. The mapping position of each PTRS sample can be determined according to the first information or the predefined rule. As illustrated in FIG. 3A, one RB includes 12 subcarriers. If the sequence numbers of the subcarriers in the RB are from 0 to 11, in FIG. 3A, the two PTRS samples of one PTRS group are mapped to subcarrier 2 and subcarrier 3 of the RB, respectively, and the two PTRS samples of the other PTRS group are mapped to subcarrier 8 and subcarrier 9 of the RB, respectively.

In this example, the PTRS is only mapped to part of the transmission layers, and the other transmission layers are used to map data. Therefore, the overhead of the PTRS is small, and the utilization of data resources is improved.

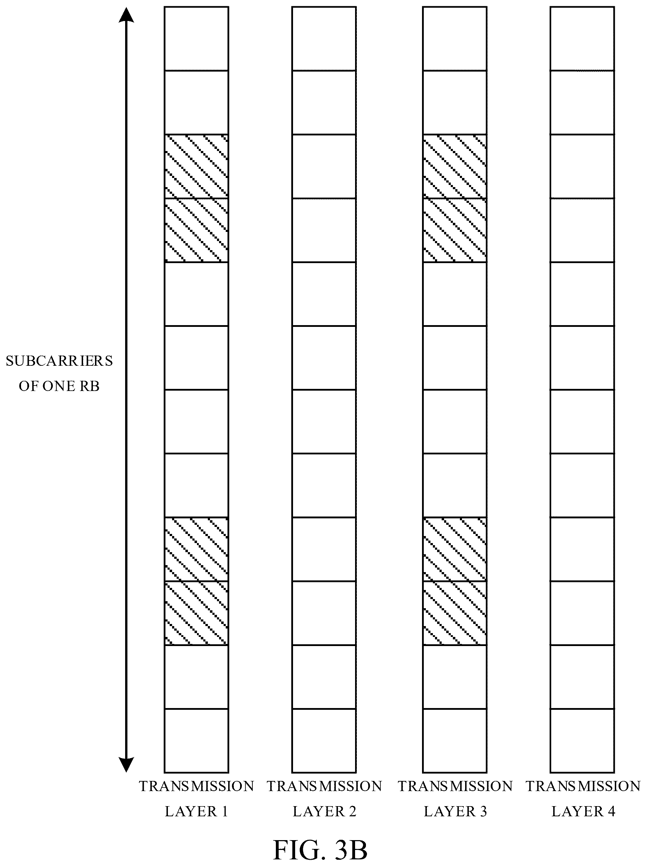

FIG. 3B is a schematic diagram of another mapping relationship according to embodiment 1 of the disclosure.

In FIG. 3B, two PTRS ports are involved.

As illustrated in FIG. 3B, the number of transmission layers of the PUSCH is 4, and the transmission layers of the PUSCH include transmission layer 1, transmission layer 2, transmission layer 3, and transmission layer 4. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is the first transmission layer associated with PTRS port 0, i.e., transmission layer 1, and the mapping layer of PTRS port 1 is the first transmission layer associated with PTRS port 1, i.e., transmission layer 3.

In this example, each PTRS port corresponds to one mapping layer, and different PTRS ports have the same PTRS group pattern (or referred to as mapping pattern) at corresponding mapping layers.

As illustrated in FIG. 3B, the mapping pattern of PTRS port 0 at transmission layer 1 is the same as the mapping pattern of PTRS port 1 at transmission layer 3. PTRS port 0 and PTRS port 1 both include two PTRS groups, and each PTRS group includes two PTRS samples. The two PTRS samples of one PTRS group are mapped to subcarrier 2 and subcarrier 3 of the RB, respectively, and the two PTRS samples of the other PTRS group are mapped to subcarrier 8 and subcarrier 9 of the RB, respectively.

In this example, the PTRS is only mapped to part of the transmission layers, and the other transmission layers are used to map data. Therefore, the overhead of the PTRS is small, and the utilization of data resources is improved. Furthermore, PTRS group patterns of different PTRS ports are the same, so the mapping rule is relatively simple.

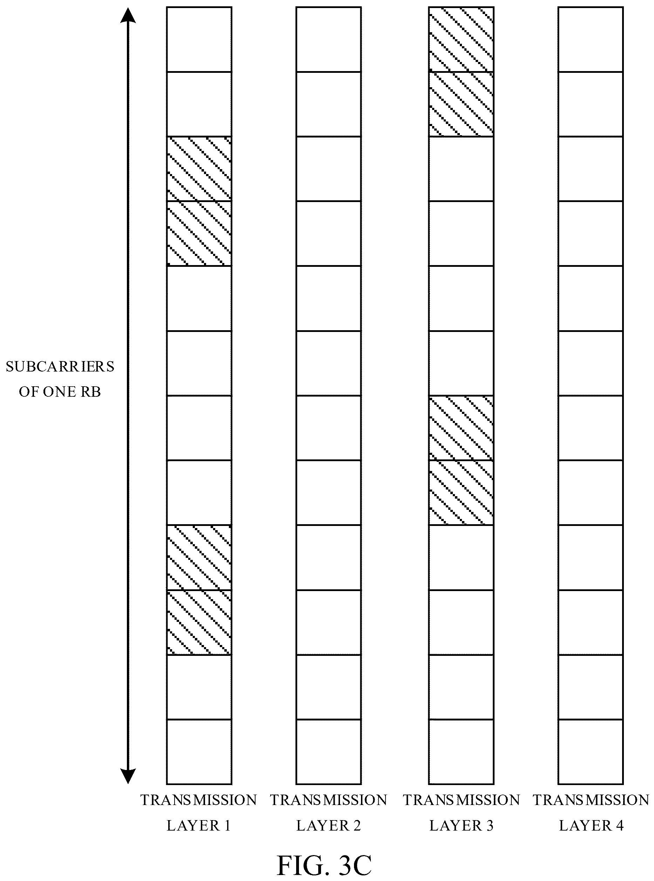

FIG. 3C is a schematic diagram of another mapping relationship according to embodiment 1 of the disclosure.

In FIG. 3C, two PTRS ports are involved.

As illustrated in FIG. 3C, the number of transmission layers of the PUSCH is 4, and the transmission layers of the PUSCH include transmission layer 1, transmission layer 2, transmission layer 3, and transmission layer 4. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is the first transmission layer associated with PTRS port 0, i.e., transmission layer 1, and the mapping layer of PTRS port 1 is the first transmission layer associated with PTRS port 1, i.e., transmission layer 3.

In this example, each PTRS port corresponds to one mapping layer, and different PTRS ports have different PTRS group patterns (or referred to as mapping patterns) at corresponding mapping layers.

In some embodiments, the first information or the predefined rule may specify a mapping position of a PTRS sample of a first PTRS port and an offset of a mapping position of a PTRS sample of a second PTRS port relative to the mapping position of the PTRS sample of the first PTRS port, and the second PTRS port includes another PTRS port of the terminal device other than the first PTRS port.

The terminal device or the network device may determine a mapping position of a PTRS sample of another PTRS port based on the mapping position of the PTRS sample of the first PTRS port and the offset. Since there is no need to specify the mapping position of the PTRS sample of each PTRS port, the configuration manner is simple and configuration resources can be saved.

As illustrated in FIG. 3C, the mapping pattern of PTRS port 0 at transmission layer 1 differs from the mapping pattern of PTRS port 1 at transmission layer 3. For PTRS port 0, each PTRS group includes two PTRS samples. The two PTRS samples of one PTRS group are mapped to subcarrier 2 and subcarrier 3 of the RB, respectively, and the two PTRS samples of the other PTRS group are mapped to subcarrier 8 and subcarrier 9 of the RB, respectively. For PTRS port 1, each PTRS group includes two PTRS samples. The two PTRS samples of one PTRS group are mapped to subcarrier 0 and subcarrier 1 of the RB, respectively, and the two PTRS samples of the other PTRS group are mapped to subcarrier 6 and subcarrier 7 of the RB, respectively.

The first information or the predefined rule may specify the mapping position of the PTRS sample of PTRS port 0 and the offset of the mapping position of the PTRS sample of PTRS port 1 relative to the mapping position of the PTRS sample of PTRS port 0. In the example of FIG. 3C, the offset may be specified as -2, i.e., the latter is offset upward by 2 subcarriers relative to the former. According to the first information or the predefined rule, the terminal device or the network device may determine the mapping positions of the PTRS samples of PTRS port 0 and PTRS port 1.

In this example, the PTRS is only mapped to part of the transmission layers, and the other transmission layers are used to map data. Therefore, the overhead of the PTRS is small, and the utilization of data resources is improved. Furthermore, different PTRS ports have different mapping patterns at different transmission layers, which randomizes interference between PTRS ports as much as possible.

In other cases, when one PTRS port is associated with L1 transmission layers (L1 is an integer greater than 2), the PTRS can be mapped to any L2 transmission layers among the L1 transmission layers. For example, if L1=4, the PTRS can be mapped to any L2=2 transmission layers.

Embodiment 2

This embodiment belongs to the second type described above, that is, the number of mapping layers of the PTRS port is equal to the number of transmission layers associated with the PTRS port, and the PTRS is mapped to all of the transmission layers associated with the PTRS. In this embodiment, PTRS patterns at all transmission layers mapped to one PTRS port are the same. For example, each PTRS port corresponds to two or more mapping layers, and the same PTRS port has the same PTRS group pattern at different mapping layers.

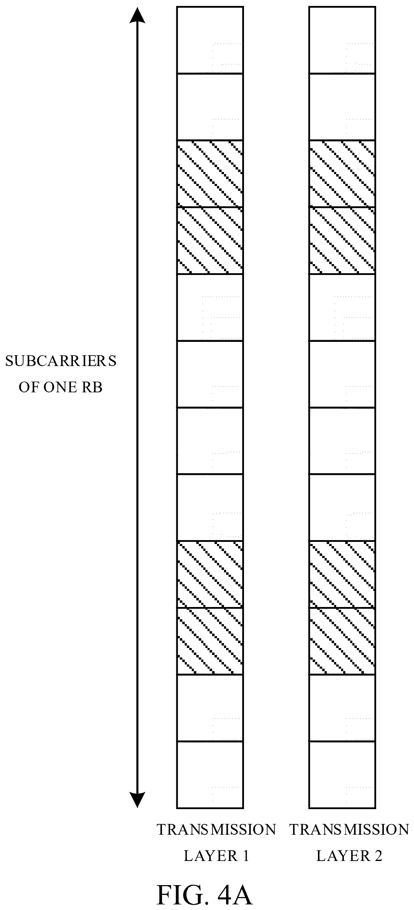

FIG. 4A is a schematic diagram of a mapping relationship according to embodiment 2 of the disclosure.

In FIG. 4A, one PTRS port is involved.

As illustrated in FIG. 4A, the number of transmission layers of the PUSCH is 2, and the transmission layers of the PUSCH include transmission layer 1 and transmission layer 2. The PTRS port is associated with two transmission layers, that is, all transmission layers associated with the PTRS port are mapped to the PTRS, and PTRS patterns mapped at respective transmission layers are the same.

In this example, the PTRS mapping rule is relatively simple, and the data mapping is also simple.

FIG. 4A illustrates PTRS group patterns of the same PTRS port at different mapping layers. For different PTRS ports, their PTRS group patterns may be the same or different, as exemplified below.

(1) PTRS group patterns of different PTRS ports are the same.

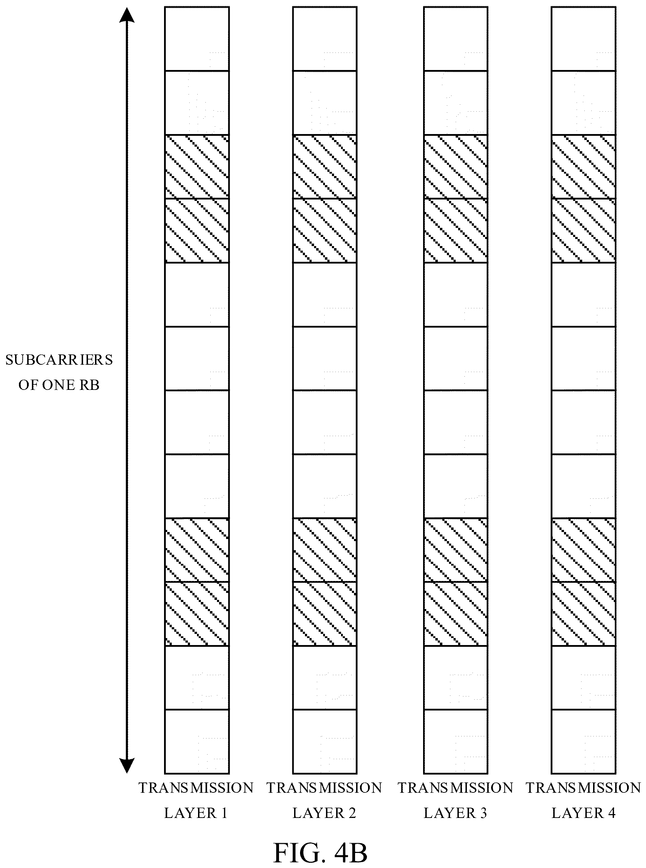

FIG. 4B illustrates an example where different PTRS ports have the same PTRS group pattern. In FIG. 4B, two PTRS ports are involved.

As illustrated in FIG. 4B, the number of transmission layers of the PUSCH is 4, and the transmission layers of the PUSCH include transmission layer 1, transmission layer 2, transmission layer 3, and transmission layer 4. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is all transmission layers associated with PTRS port 0, i.e., transmission layer 1 and transmission layer 2, and the mapping layer of PTRS port 1 is all transmission layers associated with PTRS port 1, i.e., transmission layer 3 and transmission layer 4.

For PTRS port 1 and PTRS port 0, the number of PTRS groups and the number of PTRS samples in each PTRS group are the same, and the positions of PTRS mapping patterns are also the same.

(2) PTRS group patterns of different PTRS ports are different.

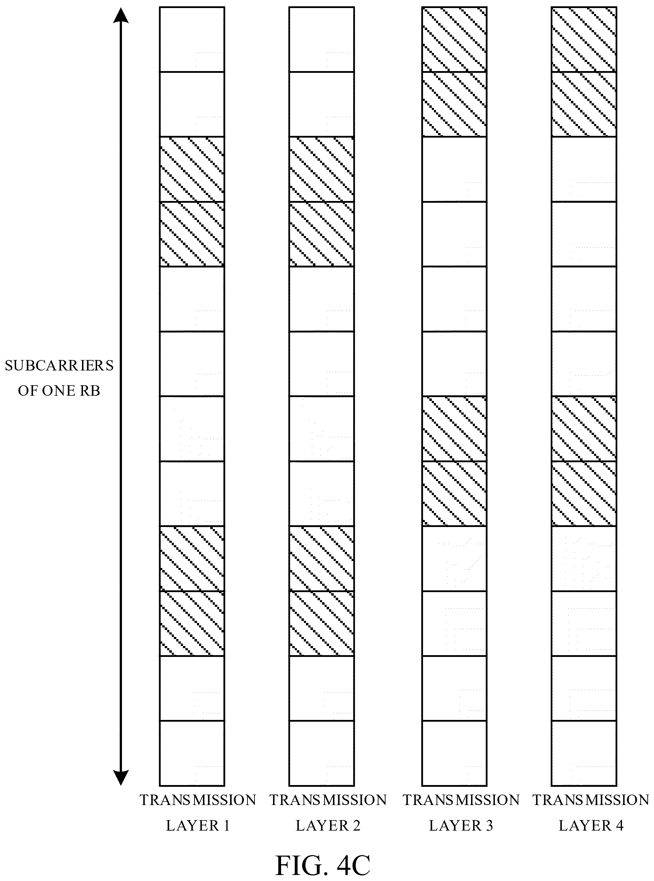

FIG. 4C illustrates an example where different PTRS ports have different PTRS group patterns. In FIG. 4C, two PTRS ports are involved.

As illustrated in FIG. 4C, the number of transmission layers of the PUSCH is 4, and the transmission layers of the PUSCH include transmission layer 1, transmission layer 2, transmission layer 3, and transmission layer 4. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is all transmission layers associated with PTRS port 0, i.e., transmission layer 1 and transmission layer 2, and the mapping layer of PTRS port 1 is all transmission layers associated with PTRS port 1, i.e., transmission layer 3 and transmission layer 4.

As illustrated in FIG. 4C, for PTRS port 1 and PTRS port 0, the number of PTRS groups and the number of PTRS samples in each PTRS group are the same, but the positions of PTRS mapping patterns are different.

In some embodiments, the first information or the predefined rule may specify a mapping position of a PTRS sample of a third PTRS port and an offset of a mapping position of a PTRS sample of a fourth PTRS port relative to the mapping position of the PTRS sample of the third PTRS port, and the fourth PTRS port includes another PTRS port of the terminal device other than the third PTRS port.

According to this specification, the terminal device or the network device may determine the mapping positions of the PTRS samples of different ports. Since there is no need to specify the mapping position of the PTRS sample of each PTRS port, the configuration manner is simple and configuration resources can be saved.

As illustrated in FIG. 4C, the mapping patterns of PTRS port 0 at transmission layer 1 and transmission layer 2 differs from the mapping patterns of PTRS port 1 at transmission layer 3 and transmission layer 4. For PTRS port 0, each PTRS group includes two PTRS samples, the two PTRS samples of one PTRS group are mapped to subcarrier 2 and subcarrier 3 of the RB, respectively, and the two PTRS samples of the other PTRS group are mapped to subcarrier 8 and subcarrier 9 of the RB, respectively. For PTRS port 1, each PTRS group includes two PTRS samples, the two PTRS samples of one PTRS group are mapped to subcarrier 0 and subcarrier 1 of the RB, respectively, and the two PTRS samples of the other PTRS group are mapped to subcarrier 6 and subcarrier 7 of the RB, respectively.

The first information or the predefined rule may specify the mapping position of the PTRS sample of PTRS port 0 and the offset of the mapping position of the PTRS sample of PTRS port 1 relative to the mapping position of the PTRS sample of PTRS port 0. In the example of FIG. 4C, the offset may be specified as -2, i.e., the latter is offset upward by 2 subcarriers relative to the former. According to the first information or the predefined rule, the terminal device or the network device may determine the mapping positions of the PTRS samples of PTRS port 0 and PTRS port 1.

In this example, the PTRS mapping rule is relatively simple, and the mapping patterns of different PTRS ports may be the same or different, which is relatively flexible and can reduce interference between different PTRS ports.

Embodiment 3

This embodiment belongs to the second type described above, that is, the number of mapping layers of the PTRS port is equal to the number of transmission layers associated with the PTRS port, and the PTRS is mapped to all of the transmission layers associated with the PTRS. In this embodiment, PTRS patterns at all transmission layers mapped to one PTRS port are different. For example, each PTRS port corresponds to two or more mapping layers, and the same PTRS port has different PTRS group patterns at different mapping layers.

In some examples, the same PTRS port has different PTRS groups at different mapping layers.

For example, the first information or the predefined rule may specify an association between a PTRS group of a PTRS port and a mapping layer of the PTRS port. With this specification, the terminal device or the network device may determine a transmission layer or transmission layers mapped to each PTRS group of the PTRS port.

In embodiments of the disclosure, the mapping relationship between PTRS groups and transmission layers can be specified in at least the following two manners. Since this example applies to the case where the PTRS is mapped to all transmission layers associated with the PTRS, the mapping layer of one PTRS port is equivalent to the transmission layer of the PTRS port, and the mapping relationship between PTRS groups and transmission layers is also equivalent to the mapping relationship/association between PTRS groups and transmission layers.

Manner 1

According to odd-even grouping, PTRS groups with odd PTRS group numbers are mapped to the first transmission layer set, and PTRS groups with even PTRS group numbers are mapped to the second transmission layer set. The first transmission layer set and the second transmission layer set are transmission layers associated with the same PTRS port.

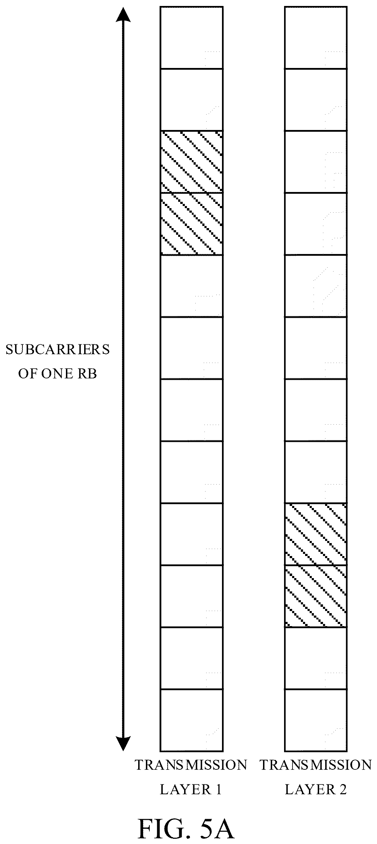

For example, in FIG. 5A, two PTRS groups, i.e., PTRS group 1 and PTRS group 2 are included. Each PTRS group includes two PTRS samples. The first transmission layer set includes transmission layer 1, and the second transmission layer set includes transmission layer 2. PTRS group 1 is mapped to the first transmission layer set, i.e., to transmission layer 1, and PTRS group 2 is mapped to the second transmission layer set, i.e., to transmission layer 2.

Manner 2

There are k PTRS groups. The first k1 PTRS groups are mapped to the first transmission layer set, and the last k2 PTRS groups are mapped to the second transmission layer set. The first transmission layer set and the second transmission layer set are transmission layers associated with the same PTRS port. k, k1, and k2 are all positive integers, and k1 + k2 = k.

For example, in FIG. 5A, two PTRS groups are included, i.e., k=2, and each PTRS group includes two PTRS samples. The first transmission layer set includes transmission layer 1, and the second transmission layer set includes transmission layer 2. The first one PTRS group is mapped to the first transmission layer set, i.e., to transmission layer 1, and last one PTRS group is mapped to the second transmission layer set, i.e., to transmission layer 2.

The above illustrates PTRS group patterns of the same PTRS port at different mapping layers. For different PTRS ports, their PTRS group patterns may be the same or different, as exemplified below.

(1) PTRS group patterns of different PTRS ports are the same.

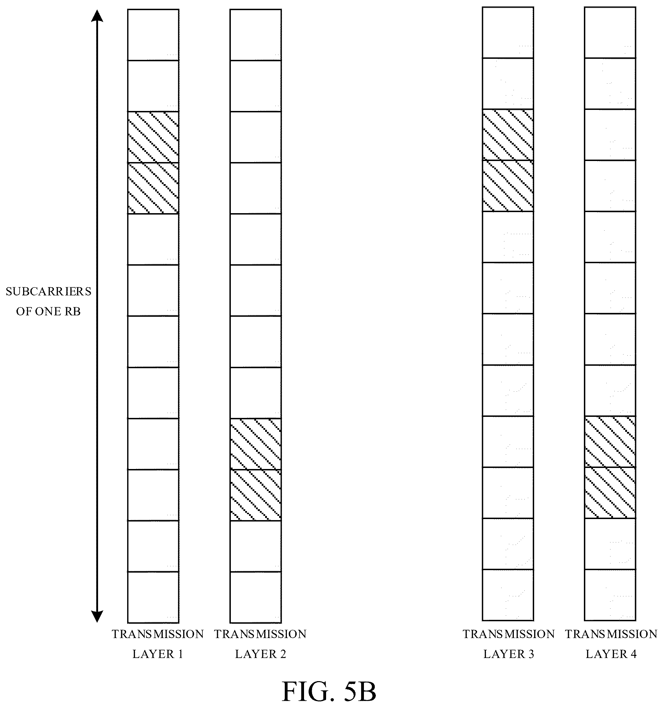

FIG. 5B illustrates an example where different PTRS ports have the same PTRS group pattern. In FIG. 5B, two PTRS ports are involved.

As illustrated in FIG. 5B, the number of transmission layers of the PUSCH is 4, and the transmission layers of the PUSCH include transmission layer 1, transmission layer 2, transmission layer 3, and transmission layer 4. Two PTRS ports, i.e., PTRS port 0 and PTRS port 1 are included. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is all transmission layers associated with PTRS port 0, i.e., transmission layer 1 and transmission layer 2, and the mapping layer of PTRS port 1 is all transmission layers associated with PTRS port 1, i.e., transmission layer 3 and transmission layer 4.

PTRS port 0 includes two PTRS groups, i.e., PTRS group 1 and PTRS group 2. PTRS group 1 is mapped to the first transmission layer of port 0, i.e., transmission layer 1, and PTRS group 2 is mapped to the second transmission layer of port 0, i.e., transmission layer 2.

PTRS port 1 and PTRS port 0 have the same PTRS group pattern. In FIG. 5B, PTRS port 1 includes two PTRS groups, i.e., PTRS group 1 and PTRS group 2. PTRS group 1 is mapped to the first transmission layer of PTRS port 1, i.e., transmission layer 3, and PTRS group 2 is mapped to the second transmission layer of PTRS port 1, i.e., transmission layer 4. Furthermore, the mapping positions of the PTRS samples in the corresponding PTRS groups are the same. That is, the mapping position of PTRS group 1 of PTRS port 0 at transmission layer 1 is the same as the mapping position of PTRS group 1 of PTRS port 1 at transmission layer 3, both are subcarrier 2 and subcarrier 3 of one RB, and the mapping position of PTRS group 2 of PTRS port 0 at transmission layer 2 is the same as the mapping position of PTRS group 2 of PTRS port 1 at transmission layer 4, both are subcarrier 8 and subcarrier 9 of one RB.

(2) PTRS group patterns of different PTRS ports are different.

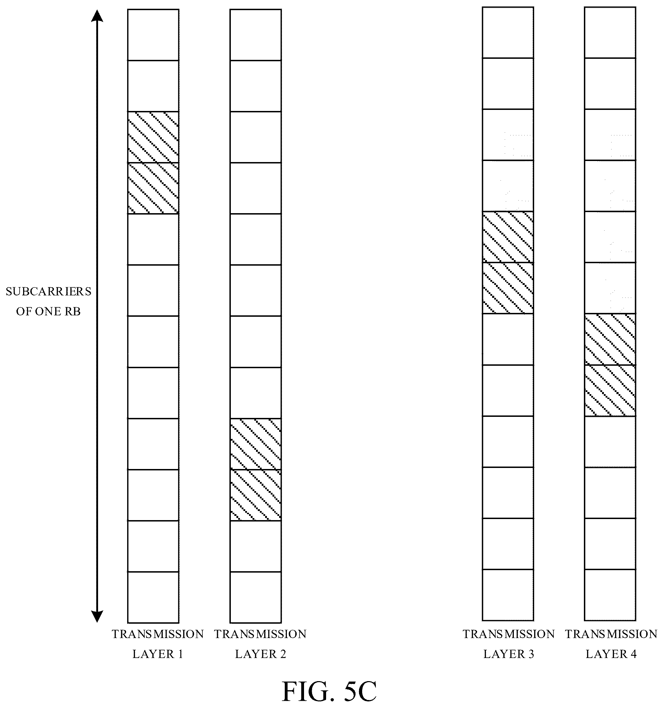

FIG. 5C illustrates an example where different PTRS ports have different PTRS group patterns. In FIG. 5C, two PTRS ports are involved.

As illustrated in FIG. 5C, the number of transmission layers of the PUSCH is 4, and the transmission layers of the PUSCH include transmission layer 1, transmission layer 2, transmission layer 3, and transmission layer 4. Two PTRS ports, i.e., PTRS port 0 and PTRS port 1 are included. PTRS port 0 is associated with two transmission layers, including transmission layer 1 and transmission layer 2, and PTRS port 1 is associated with two other transmission layers, including transmission layer 3 and transmission layer 4. The mapping layer of PTRS port 0 is all transmission layers associated with PTRS port 0, i.e., transmission layer 1 and transmission layer 2, and the mapping layer of PTRS port 1 is all transmission layers associated with PTRS port 1, i.e., transmission layer 3 and transmission layer 4.

PTRS port 0 includes two PTRS groups, i.e., PTRS group 1 and PTRS group 2. PTRS group 1 is mapped to the first transmission layer of port 0, i.e., transmission layer 1, and PTRS group 2 is mapped to the second transmission layer of port 0, i.e., transmission layer 2.

PTRS port 1 and PTRS port 0 have different PTRS group patterns. In FIG. 5C, PTRS port 1 includes two PTRS groups, i.e., PTRS group 1 and PTRS group 2. PTRS group 1 is mapped to the first transmission layer of port 1, i.e., transmission layer 3, and PTRS group 2 is mapped to the second transmission layer of port 1, i.e., transmission layer 4. However, the mapping positions of the PTRS samples in the corresponding PTRS groups are different. As illustrated in FIG. 5C, the mapping position of PTRS group 1 of PTRS port 0 at transmission layer 1 is subcarrier 2 and subcarrier 3 of one RB, and the mapping position of PTRS group 1 of PTRS port 1 at transmission layer 3 is subcarrier 4 and subcarrier 5 of one RB, which are different. The mapping position of PTRS group 2 of PTRS port 0 at transmission layer 2 is subcarrier 8 and subcarrier 9 of one RB, and the mapping position of PTRS group 2 of PTRS port 1 at transmission layer 4 is subcarrier 6 and subcarrier 7 of one RB, which are different.

In this example, different groups of the same PTRS port are mapped to different transmission layers. This does not increase PTRS overhead for PUSCH transmission, but reduces PTRS overhead for one transmission layer. Furthermore, the mapping rule is relatively simple, there is no need to specify a new PTRS pattern, and the PTRS mapping pattern for multi-layer transmission can be directly determined according to the existing pattern and the predefined rule.

Embodiment 4

In this embodiment, the resource positions of the PTRS at transmission layers other than the first transmission layer of one PTRS port are offset relative to the resource position of the first transmission layer. The number of PTRS groups mapped to different transmission layers and the number of samples in each PTRS group are the same. The offset can be determined according to the first information or the predefined rule.

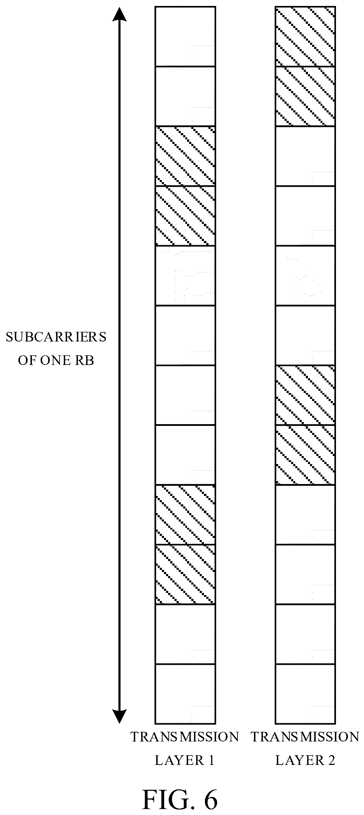

FIG. 6 illustrates an example of a resource position of a PTRS at a transmission layer of one PTRS port. As illustrated in FIG. 6, one PTRS port is associated with transmission layer 1 and transmission layer 2. All transmission layers associated with the PTRS port are mapped to the PTRS, i.e., the PTRS is mapped to transmission layer 1 and transmission layer 2. The PTRS port corresponds to two PTRS groups, including PTRS group 1 and PTRS group 2.

At transmission layer 1, the two PTRS samples in group 1 are mapped to subcarrier 2 and subcarrier 3 of one RB, respectively, and the two PTRS samples in group 2 are mapped to subcarrier 8 and subcarrier 9 of one RB, respectively. For the PTRS port, the resource position at transmission layer 2 is offset relative to the resource position at transmission layer 1. For example, the offset is -2, that is, the resource position at transmission layer 2 is offset upward by 2 subcarriers. Based on this specification, the terminal device or the network device may determine that at transmission layer 2, the two PTRS samples in group 1 are mapped to subcarrier 0 and subcarrier 1 of one RB, respectively, and the two PTRS samples in group 2 are mapped to subcarrier 6 and subcarrier 7 of one RB, respectively.

Similar to the above embodiment, the mapping patterns of different PTRS ports may be the same or different.

Embodiment 5

In embodiments of the disclosure, the PTRS group patterns at different mapping layers corresponding to one PTRS port may be different. The PTRS group patterns may be different, which may include any one or more of the following.

(1) PTRS groups are different;
(2) At different mapping layers, the number of PTRS samples in the PTRS group is different;
(3) The mapping positions of the PTRS samples are different.

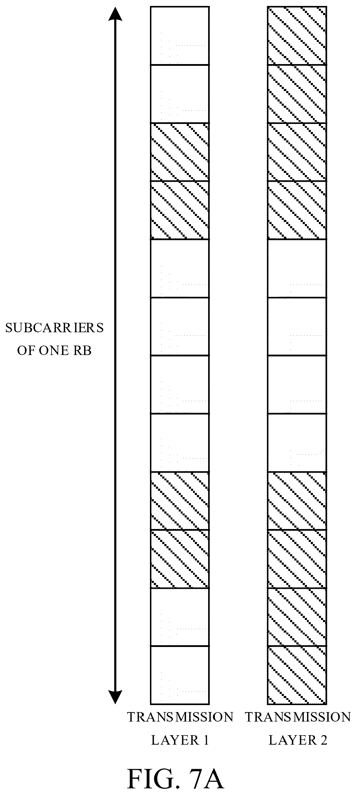

For example, in FIG. 7A, one port is mapped to transmission layer 1 and transmission layer 2. When the port is mapped to transmission layer 1, two PTRS groups are included, and each PTRS group includes two PTRS samples. When the port is mapped to transmission layer 2, two PTRS groups are included, each PTRS group includes 4 PTRS samples. FIG. 7A is merely an example, and in other implementations, there are various cases of different PTRS group patterns. For example, when the port is mapped to different transmission layers, the number of PTRS groups is different, or on the same transmission layer, different PTRS groups includes different numbers of PTRS samples, etc.

In some implementations, mapping positions of PTRS samples of the same PTRS port at different mapping layers do not overlap.

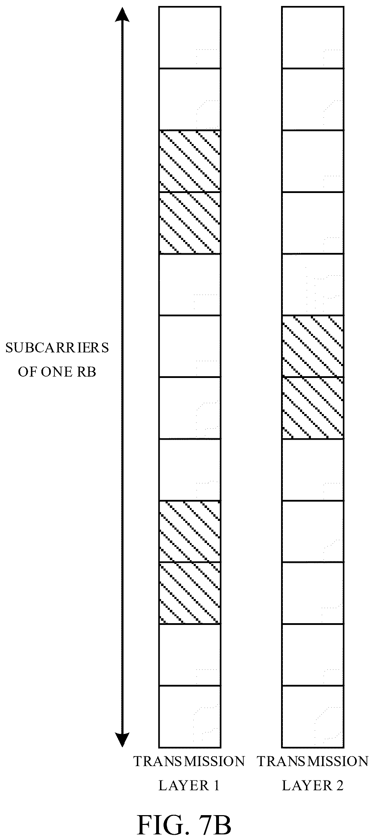

For example, in FIG. 7B, one PTRS port is mapped to two transmission layers, i.e., transmission layer 1 and transmission layer 2. The mapping position of the PTRS sample at transmission layer 1 does not overlap with the mapping position of the PTRS sample at transmission layer 2. In the example illustrated in FIG. 7B, the PTRS position at transmission layer 2 is the remaining position excluding the PTRS position at transmission layer 1. Specifically, the PTRS position at transmission layer 2 is the middle position of the remaining position excluding the PTRS position at transmission layer 1. Conversely, the PTRS position at transmission layer 1 is the upper position and the lower position of the remaining position excluding the PTRS position at transmission layer 2.

This solution offers greater flexibility and better phase noise compensation. Furthermore, by transmitting non-overlapping or partially overlapping PT-RSs, PTRS collisions across multiple PUSCHs can be avoid, thereby preventing degradation in co-phase error compensation performance and reducing interference caused by PTRSs.

Embodiment 6

In the above embodiments 1 to 5, various PTRS group patterns are introduced.

Embodiments of the disclosure may pre-specify use of the manner corresponding to the above embodiments in a predefined manner, which is relatively simple to implement.

Alternatively, embodiments of the disclosure may specify, through the first information or the predefined rule, that the PTRS group pattern at the mapping layer of the PTRS port is determined according to at least one of a scheduled bandwidth, a MCS, a channel quality (such as a CQI or an RSRP fed back by the terminal device, or a channel quality measured by the base station based on a sounding reference signal, etc.), a codeword, etc.

In some embodiments, it is pre-specified that the PTRS group pattern at the mapping layer of the PTRS port is determined according to the scheduled bandwidth and the channel quality. For example, the PTRS group pattern at the mapping layer of the PTRS port is determined according to the scheduled bandwidth and the channel quality of each transmission layer associated with the PTRS port. For example, one PTRS port is associated with transmission layer 1 and transmission layer 2. When the difference in channel quality between transmission layer 1 and transmission layer 2 is greater than or equal to a first threshold, a first PTRS group pattern and a second PTRS group pattern are used for the two mapping layers of the PTRS port, respectively. Alternatively, when the difference in channel quality between transmission layer 1 and transmission layer 2 is less than the first threshold, the second PTRS group pattern and the first PTRS group pattern are used for the two mapping layers of the PTRS port, respectively.

In some implementations, it may be pre-specified that the relationship between the mapping layer and the associated transmission layer of the PTRS port is determined according to the scheduled bandwidth and the MCS. For example, when the MCS is greater than or equal to a second threshold, the relationship between the mapping layer and the associated transmission layer of the PTRS port falls into the second type described above (i.e., the number of mapping layers of the PTRS port is equal to the number of transmission layers associated with the PTRS port, and the PTRS is mapped to all of the transmission layers associated with the PTRS). When the MCS is less than the second threshold, the relationship between the mapping layer and the associated transmission layer of the PTRS port falls into the first type described above (i.e., the number of mapping layers of the PTRS port is less than the number of transmission layers associated with the PTRS port, and the PTRS is mapped to part of the transmission layers associated with the PTRS). Alternatively, when the MCS is greater than or equal to the second threshold, the relationship between the mapping layer and the associated transmission layer of the PTRS port falls into the first type. When the MCS is less than the second threshold, the relationship between the mapping layer and the associated transmission layer of the PTRS port falls into the first type.

In this way, the PTRS group pattern can be determined according to different scheduling environments, and the performance for phase noise compensation is better.

In addition, in embodiments of the disclosure, the network device may indicate a mapping manner through a high-layer signaling, such as a RRC or a MAC CE, or a physical layer signaling. The manner of determining the PTRS group pattern according to the manner determined through network indication is more flexible.

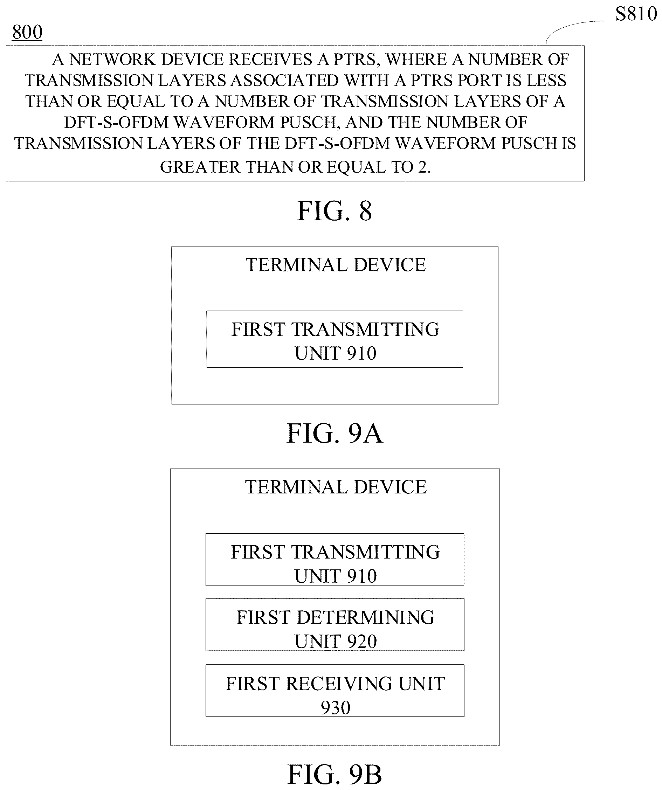

The disclosure further provides a signal transmission method. FIG. 8 is a schematic flowchart of a signal transmission method 800 according to an embodiment of the disclosure. Optionally, the method may be applied to the system illustrated in FIG. 1, but is not limited thereto. The method includes at least part of the following.

S810. A network device receives a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

In some implementations, the method further includes the following. Before receiving the PTRS, the network device may determine mapping information of the PTRS. After determining the mapping information of the PTRS, the network device may receive the PTRS according to the mapping information of the PTRS.

For example, the mapping information of the PTRS may include at least one of: PTRS port number information; a transmission layer associated with a PTRS port; a mapping layer of a PTRS port; time density information of the PTRS corresponding to a mapping layer of a PTRS port; or a mapping pattern of the PTRS corresponding to a mapping layer of a PTRS port.

The network device receives the PTRS according to the determined content.

In some implementations, the mapping pattern of the PTRS corresponding to the mapping layer of the PTRS port includes a PTRS group pattern at the mapping layer of the PTRS port. The PTRS group pattern at the mapping layer of the PTRS port may include at least one of: a PTRS group corresponding to the mapping layer of the PTRS port; a number of PTRS samples included in a PTRS group; or a mapping position of a PTRS sample.

In some implementations, the method further includes the following. The network device transmits first information to a terminal device, where the first information is used to determine mapping information of the PTRS. For example, the network device may transmit at least one of an RRC signaling, a MAC CE, or a physical layer signaling, where the at least one of the RRC signaling, the MAC CE, or the physical layer signaling carries the first information.

In some embodiments, the first information includes a TPMI and/or a maximum number of PTRS ports, and the TPMI and/or the maximum number of PTRS ports is used to determine PTRS port number information.

In some implementations, the number of transmission layers associated with the PTRS port is greater than or equal to 1.

In some implementations, a number of mapping layers of the PTRS port is less than the number of transmission layers associated with the PTRS port.

In some implementations, the mapping layers of the PTRS port is a subset of the transmission layers associated with the PTRS port.

In some implementations, the network device determines a mapping layer of the PTRS port from the transmission layers associated with the PTRS port.

In some implementations, one or more transmission layers with a smallest index among the transmission layers associated with the PTRS port is determined by the network device as a mapping layer of the PTRS port.

In some implementations, each PTRS port corresponds to one mapping layer, and different PTRS ports have a same PTRS group pattern at corresponding mapping layers.

In some implementations, each PTRS port corresponds to one mapping layer, and different PTRS ports have different PTRS group patterns at corresponding mapping layers.

In some embodiments, the mapping information of the PTRS is determined by the network device according to a mapping position of a PTRS sample of a first PTRS port and an offset of a mapping position of a PTRS sample of a second PTRS port relative to the mapping position of the PTRS sample of the first PTRS port, and the second PTRS port includes another PTRS port of a terminal device other than the first PTRS port.

In some implementations, a number of mapping layers of the PTRS port is equal to the number of transmission layers associated with the PTRS port.

In some implementations, each PTRS port corresponds to two or more mapping layers, and a same PTRS port has a same PTRS group pattern at different mapping layers.

In some implementations, each PTRS port corresponds to two or more mapping layers, and a same PTRS port has different PTRS group patterns at different mapping layers.

In some implementations, a same PTRS port has different PTRS groups at different mapping layers.

In some implementations, the mapping information of the PTRS is determined by the network device according to an association between a PTRS group of a PTRS port and a mapping layer of the PTRS port.

In some implementations, mapping positions of PTRS samples of a same PTRS port at different mapping layers do not overlap.

In some implementations, different PTRS ports have a same PTRS group pattern.

In some implementations, different PTRS ports have different PTRS group patterns.

In some embodiments, the mapping information of the PTRS is determined by the network device according to a mapping position of a PTRS sample of a third PTRS port and an offset of a mapping position of a PTRS sample of a fourth PTRS port relative to the mapping position of the PTRS sample of the third PTRS port, and the fourth PTRS port includes another PTRS port of a terminal device other than the third PTRS port.

In some embodiments, the first information is used to determine a PTRS group pattern at a mapping layer of a PTRS port based on at least one of a scheduled bandwidth, a MCS, a channel quality, or a codeword.

In embodiments of the disclosure, the network device may determine the mapping information of the PTRS and receive the PTRS, where the number of transmission layers associated with the PTRS port is less than or equal to the number of transmission layers of the DFT-S-OFDM waveform PUSCH, and the number of transmission layers of the DFT-S-OFDM waveform PUSCH is greater than or equal to 2. Therefore, when the number of transmission layers of the DFT-S-OFDM waveform PUSCH is greater than or equal to 2, the mapping of the PTRS in multi-layer PUSCH transmission can be achieved. The network device may determine the mapping information of the PTRS according to a predefined rule. Alternatively, the network device may transmit the first information to the terminal device for the terminal device to determine the mapping information of the PTRS.

FIG. 9A is a schematic block diagram of a terminal device according to an embodiment of the disclosure. The terminal device may include a first transmitting unit 910. The first transmitting unit 910 is configured to a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

FIG. 9B is a schematic block diagram of a terminal device according to another embodiment of the disclosure. As illustrated in FIG. 9B, the terminal device may further include a first determining unit 920. The first determining unit 920 is configured to determine mapping information of the PTRS according to first information or a predefined rule.

In an implementation, the mapping information of the PTRS includes at least one of: PTRS port number information; a transmission layer associated with a PTRS port; a mapping layer of a PTRS port; time density information of the PTRS corresponding to a mapping layer of a PTRS port; or a mapping pattern of the PTRS corresponding to a mapping layer of a PTRS port.

In an implementation, the mapping pattern of the PTRS corresponding to the mapping layer of the PTRS port includes a PTRS group pattern at the mapping layer of the PTRS port.

In an implementation, the PTRS group pattern at the mapping layer of the PTRS port includes at least one of: a PTRS group corresponding to the mapping layer of the PTRS port; a number of PTRS samples included in a PTRS group; or a mapping position of a PTRS sample.

In an implementation, the first information includes a TPMI and/or a maximum number of PTRS ports, and the first determining unit 920 is configured to determine PTRS port number information according to the TPMI and/or the maximum number of PTRS ports.

In an implementation, the number of transmission layers associated with the PTRS port is greater than or equal to 1.

In an implementation, a number of mapping layers of the PTRS port is less than the number of transmission layers associated with the PTRS port.

In an implementation, the mapping layers of the PTRS port is a subset of the transmission layers associated with the PTRS port.

In an implementation, the first information or the predefined rule is used to determine a mapping layer of the PTRS port from the transmission layers associated with the PTRS port.

In an implementation, the first information or the predefined rule specifies one or more transmission layers with a smallest index among the transmission layers associated with the PTRS port as a mapping layer of the PTRS port.

In an implementation, each PTRS port corresponds to one mapping layer, and different PTRS ports have a same PTRS group pattern at corresponding mapping layers.

In an implementation, each PTRS port corresponds to one mapping layer, and different PTRS ports have different PTRS group patterns at corresponding mapping layers.

In an implementation, the first information or the predefined rule specifies a mapping position of a PTRS sample of a first PTRS port and an offset of a mapping position of a PTRS sample of a second PTRS port relative to the mapping position of the PTRS sample of the first PTRS port, and the second PTRS port includes another PTRS port of the terminal device other than the first PTRS port.

In an implementation, a number of mapping layers of the PTRS port is equal to the number of transmission layers associated with the PTRS port.

In an implementation, each PTRS port corresponds to two or more mapping layers, and a same PTRS port has a same PTRS group pattern at different mapping layers.

In an implementation, each PTRS port corresponds to two or more mapping layers, and a same PTRS port has different PTRS group patterns at different mapping layers.

In an implementation, a same PTRS port has different PTRS groups at different mapping layers.

In an implementation, the first information or the predefined rule specifies an association between a PTRS group of a PTRS port and a mapping layer of the PTRS port.

In an implementation, mapping positions of PTRS samples of a same PTRS port at different mapping layers do not overlap.

In an implementation, different PTRS ports have a same PTRS group pattern.

In an implementation, different PTRS ports have different PTRS group patterns.

In an implementation, the first information or the predefined rule specifies a mapping position of a PTRS sample of a third PTRS port and an offset of a mapping position of a PTRS sample of a fourth PTRS port relative to the mapping position of the PTRS sample of the third PTRS port, and the fourth PTRS port includes another PTRS port of the terminal device other than the third PTRS port.

In an implementation, the first information or the predefined rule is used to determine a PTRS group pattern at a mapping layer of a PTRS port based on at least one of a scheduled bandwidth, a MCS, a channel quality, or a codeword.

As illustrated in FIG. 9B, the terminal device may further include a first receiving unit 930. The first receiving unit 930 is configured to receive the first information from a network device.

The first receiving unit 930 may be configured to receive at least one of a RRC signaling, a media access control element (MAC CE), or a physical layer signaling, where the at least one of the RRC signaling, the MAC CE, or the physical layer signaling carries the first information.

The terminal device in embodiments of the disclosure can implement corresponding functions of the terminal device in the foregoing method embodiments. For the procedure, function, implementation, and advantage corresponding to each module (sub-module, unit, or assembly, etc.) in the terminal device, reference can be made to the corresponding illustrations in the foregoing method embodiments, which will not be described in detail again herein. It should be noted that, the functions of various modules (sub-modules, units, or assemblies, etc.) in the terminal device 100 described in embodiments of the disclosure may be implemented by different modules (sub-modules, units, or assemblies, etc.), or may be implemented by the same module (sub-module, unit, or assembly, etc.).

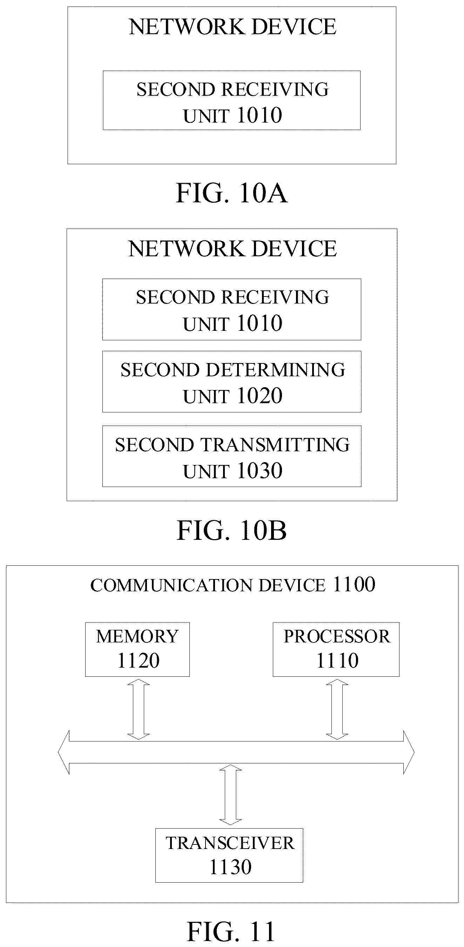

FIG. 10A is a schematic block diagram of a network device according to an embodiment of the disclosure. The network device may include a second receiving unit 1010. The second receiving unit 1010 is configured to a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

FIG. 10B is a schematic block diagram of a network device according to another embodiment of the disclosure. As illustrated in FIG. 10B, the network device may further include a second determining unit 1020. The second determining unit 1020 is configured to determine mapping information of the PTRS.

In an implementation, the mapping information of the PTRS includes at least one of: PTRS port number information; a transmission layer associated with a PTRS port; a mapping layer of a PTRS port; time density information of the PTRS corresponding to a mapping layer of a PTRS port; or a mapping pattern of the PTRS corresponding to a mapping layer of a PTRS port.

In an implementation, the mapping pattern of the PTRS corresponding to the mapping layer of the PTRS port includes a PTRS group pattern at the mapping layer of the PTRS port.

In an implementation, the PTRS group pattern at the mapping layer of the PTRS port includes at least one of: a PTRS group corresponding to the mapping layer of the PTRS port; a number of PTRS samples included in a PTRS group; or a mapping position of a PTRS sample.

As illustrated in FIG. 10B, the network device may further include a second transmitting unit 1030. The second transmitting unit 1030 is configured to transmit first information to a terminal device, where the first information is used to determine mapping information of the PTRS.

In an implementation, the first information includes a TPMI and/or a maximum number of PTRS ports, and the TPMI and/or the maximum number of PTRS ports is used to determine PTRS port number information.

In an implementation, the number of transmission layers associated with the PTRS port is greater than or equal to 1.

In an implementation, a number of mapping layers of the PTRS port is less than the number of transmission layers associated with the PTRS port.

In an implementation, the mapping layers of the PTRS port is a subset of the transmission layers associated with the PTRS port.

In an implementation, the second determining unit 1020 is configured to determine a mapping layer of the PTRS port from the transmission layers associated with the PTRS port.

In an implementation, the second determining unit 1020 is configured to determine one or more transmission layers with a smallest index among the transmission layers associated with the PTRS port as a mapping layer of the PTRS port.

In an implementation, each PTRS port corresponds to one mapping layer, and different PTRS ports have a same PTRS group pattern at corresponding mapping layers.

In an implementation, each PTRS port corresponds to one mapping layer, and different PTRS ports have different PTRS group patterns at corresponding mapping layers.

In an implementation, the second determining unit 1020 is configured to determine the mapping information of the PTRS according to a mapping position of a PTRS sample of a first PTRS port and an offset of a mapping position of a PTRS sample of a second PTRS port relative to the mapping position of the PTRS sample of the first PTRS port, and the second PTRS port includes another PTRS port of a terminal device other than the first PTRS port.

In an implementation, a number of mapping layers of the PTRS port is equal to the number of transmission layers associated with the PTRS port.

In an implementation, each PTRS port corresponds to two or more mapping layers, and a same PTRS port has a same PTRS group pattern at different mapping layers.

In an implementation, each PTRS port corresponds to two or more mapping layers, and a same PTRS port has different PTRS group patterns at different mapping layers.

In an implementation, a same PTRS port has different PTRS groups at different mapping layers.

In an implementation, the second determining unit 1020 is configured to determine the mapping information of the PTRS according to an association between a PTRS group of a PTRS port and a mapping layer of the PTRS port.

In an implementation, mapping positions of PTRS samples of a same PTRS port at different mapping layers do not overlap.

In an implementation, different PTRS ports have a same PTRS group pattern.

In an implementation, different PTRS ports have different PTRS group patterns.

In an implementation, the second determining unit 1020 is configured to determine the mapping information of the PTRS according to a mapping position of a PTRS sample of a third PTRS port and an offset of a mapping position of a PTRS sample of a fourth PTRS port relative to the mapping position of the PTRS sample of the third PTRS port, and the fourth PTRS port includes another PTRS port of a terminal device other than the third PTRS port.

In an implementation, the first information is used to determine a PTRS group pattern at a mapping layer of a PTRS port based on at least one of a scheduled bandwidth, a MCS, a channel quality, or a codeword.

In an implementation, the second transmitting unit 1020 is configured to transmit at least one of a RRC signaling, a MAC CE, or a physical layer signaling, where the at least one of the RRC signaling, the MAC CE, or the physical layer signaling carries the first information.

The network device in embodiments of the disclosure can implement corresponding functions of the network device in the foregoing method embodiments. For the procedure, function, implementation, and advantage corresponding to each module (sub-module, unit, or assembly, etc.) in the network device, reference can be made to the corresponding illustrations in the foregoing method embodiments, which will not be described in detail again herein. It should be noted that, the functions of various modules (sub-modules, units, or assemblies, etc.) in the network device described in embodiments of the disclosure may be implemented by different modules (sub-modules, units, or assemblies, etc.), or may be implemented by the same module (sub-module, unit, or assembly, etc.).

FIG. 11 is a schematic structural diagram of a communication device 1100 according to embodiments of the disclosure. The communication device 1100 includes a processor 1110. The processor 1110 is configured to invoke and execute computer programs stored in a memory to cause the communication device 1100 to perform the method in embodiments of the disclosure.

In an implementation, the communication device 1100 can further include a memory 1120. The processor 1110 is configured to invoke and execute computer programs stored in the memory 1120 to cause the communication device 1100 to perform the method in embodiments of the disclosure.

The memory 1120 may be a separate device independent of the processor 1110, or may be integrated in the processor 1110.

In an implementation, the communication device 1100 can further include a transceiver 1130. The processor 1110 can control the transceiver 1130 to communicate with other devices. Specifically, the transceiver 1130 can transmit information or data to other devices, or receive information or data transmitted by other devices.

The transceiver 1130 may include a transmitter and a receiver. The transceiver 1130 may further include one or more antennas.

In an implementation, the communication device 1100 may be the network device in the embodiments of the disclosure, and the communication device 1100 can implement the corresponding process implemented by the network device in various methods according to embodiments of the disclosure, which will not be repeated herein for the sake of simplicity.

In an implementation, the communication device 1100 may be the terminal device in the embodiments of the disclosure, and the communication device 1100 can implement the corresponding process implemented by the terminal device in various methods according to embodiments of the disclosure, which will not be repeated herein for the sake of simplicity.

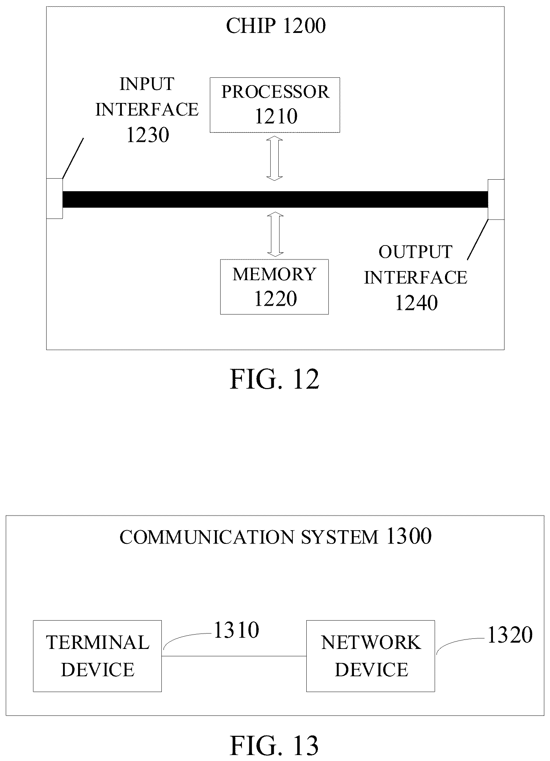

FIG. 12 is a schematic structural diagram of a chip 1200 according to embodiments of the disclosure. The chip 1200 includes a processor 1210. The processor 1210 is configured to invoke and execute computer programs stored in a memory to perform the method in embodiments of the disclosure.

In an implementation, the chip 1200 may further include a memory 1220. The processor 1210 is configured to invoke and execute computer programs stored in the memory 1220 to perform the method performed by the terminal device or the network device in embodiments of the disclosure.

The memory 1220 may be a separate device independent of the processor 1210, or may be integrated in the processor 1210.

In an implementation, the chip 1200 may further include an input interface 1230. The processor 1210 can control the input interface 1230 to communicate with other devices or chips. Specifically, the input interface 1230 can obtain information or data transmitted by other devices or chips.

In an implementation, the chip 1200 may further include an output interface 1240. The processor 1210 can control the output interface 1240 to communicate with other devices or chips. Specifically, the output interface 1240 can output information or data to other devices or chips.

In an implementation, the chip can be applied to the network device in the embodiments of the disclosure, and the chip can implement the corresponding process implemented by the network device in various methods according to embodiments of the disclosure, which will not be repeated herein for the sake of simplicity.

In an implementation, the chip can be applied to the terminal device in the embodiments of the disclosure, and the chip can implement the corresponding process implemented by the terminal device in various methods according to embodiments of the disclosure, which will not be repeated herein for the sake of simplicity.

The chip applied to the network device and the chip applied to the terminal device may be the same chip or different chips.

It can be understood that, the chip mentioned in the embodiments of the disclosure may also be referred to as a system-level chip, a system chip, a chip system, a system-on-a-chip chip, or the like.

The processor mentioned above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor may be a microprocessor, or may also be any conventional processor, or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It can be understood that, the memory mentioned above is an example rather than limitation. For example, the memory may be a static RAM (SRAM), a dynamic RAM (DRAM), a synchronous DRAM (SDRAM), a double data rate SDRAM (DDRSDRAM), an enhanced SDRAM (ESDRAM), a synclink DRAM (SLDRAM), and a direct rambus RAM (DRRAM). That is, the memory in embodiments of the disclosure is intended to include, but is not limited to, these and any other suitable types of memory.

FIG. 13 is a schematic block diagram of a communication system 1300 according to embodiments of the disclosure. The communication system 1300 includes a terminal device 1310 and a network device 1320.

The terminal device 1310 includes a first transmitting unit. The first transmitting unit is configured to transmit a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

The network device 1320 includes a second receiving unit. The second receiving unit is configured to receive a PTRS, where a number of transmission layers associated with a PTRS port is less than or equal to a number of transmission layers of a DFT-S-OFDM waveform PUSCH, and the number of transmission layers of the DFT-S-OFDM waveform PUSCH is greater than or equal to 2.

The terminal device 1310 may be configured to implement corresponding functions implemented by the terminal device in the foregoing method, and the network device 1320 may be configured to implement corresponding functions implemented by the network device in the foregoing method, which will not be described in detail again herein for the sake of brevity.

All or part of the above embodiments can be implemented through software, hardware, firmware, or any other combination thereof. When implemented by software, all or part of the above embodiments can be implemented in a form of a computer program product. The computer program product includes one or more computer instructions. When the computer program instructions are loaded and executed on a computer, all or part of the processes or functions of the embodiments of the disclosure are performed. The computer may be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner may be, for example, a coaxial cable, an optical fiber, a digital subscriber line (DSL), etc. The wireless manner may be, for example, infrared, wireless, microwave, etc. The computer-readable storage medium may be any computer accessible usable-medium or a data storage device such as a server, a data center, or the like which is integrated with one or more usable media. The usable medium may be a magnetic medium (such as a soft disc, a hard disc, or a magnetic tape), an optical medium (such as a digital video disc (DVD)), or a semiconductor medium (such as a solid state disk (SSD)), etc.

It can be understood that, in various embodiments of the disclosure, the magnitude of a sequence number of each process does not mean an order of execution, and the order of execution of each process may be determined by its function and an internal logic and shall not constitute any limitation to an embodiment process in embodiments of the disclosure.

It will be evident to those skilled in the art that, for the sake of convenience and simplicity, for the specific working processes of the foregoing systems, apparatuses, and units, reference can be made to the corresponding processes in the foregoing method embodiments, which will not be repeated herein.

The above are merely specific embodiments of the disclosure and are not intended to limit the scope of protection of the disclosure. Any modification and replacement made by those skilled in the art within the technical scope of the disclosure shall be included in the scope of protection of the disclosure. Therefore, the scope of protection of the disclosure should be stated in the scope of protection of the claims.

**Claims**

1. A signal transmission method, comprising:
   transmitting, by a terminal device, a phase-tracking reference signal (PTRS), wherein a number of transmission layers associated with a PTRS port is less than or equal to a number of transmission layers of a discrete Fourier transform-spread-orthogonal frequency division multiplexing (DFT-S-OFDM) waveform physical uplink shared channel (PUSCH), and the number of transmission layers of the DFT-S-OFDM waveform PUSCH is greater than or equal to 2.

2. The method of claim 1, further comprising:
determining, by the terminal device, mapping information of the PTRS according to first information or a predefined rule.

3. The method of claim 2, wherein the mapping information of the PTRS comprises at least one of:

PTRS port number information;
a transmission layer associated with a PTRS port;
a mapping layer of a PTRS port;
time density information of the PTRS corresponding to a mapping layer of a PTRS port; or
a mapping pattern of the PTRS corresponding to a mapping layer of a PTRS port.

4. The method of claim 3, wherein the mapping pattern of the PTRS corresponding to the mapping layer of the PTRS port comprises a PTRS group pattern at the mapping layer of the PTRS port.

5. The method of claim 4, wherein the PTRS group pattern at the mapping layer of the PTRS port comprises at least one of:

a PTRS group corresponding to the mapping layer of the PTRS port;
a number of PTRS samples comprised in a PTRS group; or
a mapping position of a PTRS sample.

6. The method of any of claims 2 to 5, wherein the first information comprises a precoding information and number of layers (TPMI) and/or a maximum number of PTRS ports, and PTRS port number information is determined by the terminal device according to the TPMI and/or the maximum number of PTRS ports.

7. The method of any of claims 3 to 5, wherein the number of transmission layers associated with the PTRS port is greater than or equal to 1.

8. The method of claim 7, wherein a number of mapping layers of the PTRS port is less than the number of transmission layers associated with the PTRS port.

9. The method of claim 8, wherein the mapping layers of the PTRS port is a subset of the transmission layers associated with the PTRS port.

10. The method of claim 8 or 9, wherein the first information or the predefined rule is used to determine a mapping layer of the PTRS port from the transmission layers associated with the PTRS port.

11. The method of claim 10, wherein the first information or the predefined rule specifies one or more transmission layers with a smallest index among the transmission layers associated with the PTRS port as a mapping layer of the PTRS port.

12. The method of any of claims 8 to 11, wherein each PTRS port corresponds to one mapping layer, and different PTRS ports have a same PTRS group pattern at corresponding mapping layers.

13. The method of any of claims 8 to 11, wherein each PTRS port corresponds to one mapping layer, and different PTRS ports have different PTRS group patterns at corresponding mapping layers.

14. The method of claim 13, wherein the first information or the predefined rule specifies a mapping position of a PTRS sample of a first PTRS port and an offset of a mapping position of a PTRS sample of a second PTRS port relative to the mapping position of the PTRS sample of the first PTRS port, and wherein the second PTRS port comprises another PTRS port of the terminal device other than the first PTRS port.

15. The method of claim 7, wherein a number of mapping layers of the PTRS port is equal to the number of transmission layers associated with the PTRS port.

**16.** The method of claim 15, wherein each PTRS port corresponds to two or more mapping layers, and a same PTRS port has a same PTRS group pattern at different mapping layers.

**17.** The method of claim 15, wherein each PTRS port corresponds to two or more mapping layers, and a same PTRS port has different PTRS group patterns at different mapping layers.

**18.** The method of claim 15, wherein a same PTRS port has different PTRS groups at different mapping layers.

**19.** The method of claim 18, wherein the first information or the predefined rule specifies an association between a PTRS group of a PTRS port and a mapping layer of the PTRS port.

**20.** The method of any of claims 17 to 19, wherein mapping positions of PTRS samples of a same PTRS port at different mapping layers do not overlap.

**21.** The method of any of claims 15 to 20, wherein different PTRS ports have a same PTRS group pattern.

**22.** The method of any of claims 15 to 20, wherein different PTRS ports have different PTRS group patterns.

**23.** The method of claim 22, wherein the first information or the predefined rule specifies a mapping position of a PTRS sample of a third PTRS port and an offset of a mapping position of a PTRS sample of a fourth PTRS port relative to the mapping position of the PTRS sample of the third PTRS port, and wherein the fourth PTRS port comprises another PTRS port of the terminal device other than the third PTRS port.

**24.** The method of any of claims 2 to 23, wherein the first information or the predefined rule is used to determine a PTRS group pattern at a mapping layer of a PTRS port based on at least one of a scheduled bandwidth, a modulation and coding scheme (MCS), a channel quality, or a codeword.

**25.** The method of claim 24, further comprising:
receiving, by the terminal device, the first information from a network device.

**26.** The method of claim 25, wherein receiving, by the terminal device, the first information from the network device comprises:
receiving, by the terminal device, at least one of a radio resource control (RRC) signaling, a media access control element (MAC CE), or a physical layer signaling, wherein the at least one of the RRC signaling, the MAC CE, or the physical layer signaling carries the first information.

**27.** A signal transmission method, comprising:
receiving, by a network device, a phase-tracking reference signal (PTRS), wherein a number of transmission layers associated with a PTRS port is less than or equal to a number of transmission layers of a discrete Fourier transform-spread-orthogonal frequency division multiplexing (DFT-S-OFDM) waveform physical uplink shared channel (PUSCH), and the number of transmission layers of the DFT-S-OFDM waveform PUSCH is greater than or equal to 2.

**28.** The method of claim 27, further comprising:
determining, by the network device, mapping information of the PTRS.

**29.** The method of claim 28, wherein the mapping information of the PTRS comprises at least one of:

PTRS port number information;
a transmission layer associated with a PTRS port;
a mapping layer of a PTRS port;
time density information of the PTRS corresponding to a mapping layer of a PTRS port; or
a mapping pattern of the PTRS corresponding to a mapping layer of a PTRS port.

**30.** The method of claim 29, wherein the mapping pattern of the PTRS corresponding to the mapping layer of the PTRS port comprises a PTRS group pattern at the mapping layer of the PTRS port.

**31.** The method of claim 30, wherein the PTRS group pattern at the mapping layer of the PTRS port comprises at least one of:

a PTRS group corresponding to the mapping layer of the PTRS port;
a number of PTRS samples comprised in a PTRS group; or
a mapping position of a PTRS sample.

32. The method of any of claims 27 to 31, further comprising:
transmitting, by the network device, first information to a terminal device, wherein the first information is used to determine mapping information of the PTRS.

33. The method of claim 32, wherein the first information comprises a precoding information and number of layers (TPMI) and/or a maximum number of PTRS ports, and the TPMI and/or the maximum number of PTRS ports is used to determine PTRS port number information.

34. The method of any of claims 28 to 33, wherein the number of transmission layers associated with the PTRS port is greater than or equal to 1.

35. The method of claim 34, wherein a number of mapping layers of the PTRS port is less than the number of transmission layers associated with the PTRS port.

36. The method of claim 35, wherein the mapping layers of the PTRS port is a subset of the transmission layers associated with the PTRS port.

37. The method of claim 35 or 36, further comprising:
determining, by the network device, a mapping layer of the PTRS port from the transmission layers associated with the PTRS port.

38. The method of claim 37, wherein one or more transmission layers with a smallest index among the transmission layers associated with the PTRS port is determined by the network device as a mapping layer of the PTRS port.

39. The method of any of claims 35 to 38, wherein each PTRS port corresponds to one mapping layer, and different PTRS ports have a same PTRS group pattern at corresponding mapping layers.

40. The method of any of claims 35 to 38, wherein each PTRS port corresponds to one mapping layer, and different PTRS ports have different PTRS group patterns at corresponding mapping layers.

41. The method of claim 40, wherein the mapping information of the PTRS is determined by the network device according to a mapping position of a PTRS sample of a first PTRS port and an offset of a mapping position of a PTRS sample of a second PTRS port relative to the mapping position of the PTRS sample of the first PTRS port, and wherein the second PTRS port comprises another PTRS port of a terminal device other than the first PTRS port.

42. The method of claim 34, wherein a number of mapping layers of the PTRS port is equal to the number of transmission layers associated with the PTRS port.

43. The method of claim 42, wherein each PTRS port corresponds to two or more mapping layers, and a same PTRS port has a same PTRS group pattern at different mapping layers.

44. The method of claim 42, wherein each PTRS port corresponds to two or more mapping layers, and a same PTRS port has different PTRS group patterns at different mapping layers.

45. The method of claim 44, wherein a same PTRS port has different PTRS groups at different mapping layers.

46. The method of claim 45, wherein the mapping information of the PTRS is determined by the network device according to an association between a PTRS group of a PTRS port and a mapping layer of the PTRS port.

47. The method of any of claims 44 to 46, wherein mapping positions of PTRS samples of a same PTRS port at different mapping layers do not overlap.

48. The method of any of claims 44 to 47, wherein different PTRS ports have a same PTRS group pattern.

49. The method of any of claims 44 to 48, wherein different PTRS ports have different PTRS group patterns.

50. The method of claim 49, wherein the mapping information of the PTRS is determined by the network device according to a mapping position of a PTRS sample of a third PTRS port and an offset of a mapping position of a PTRS sample of a fourth PTRS port relative to the mapping position of the PTRS sample of the third PTRS port, and wherein the fourth PTRS port comprises another PTRS port of a terminal device other than the third PTRS port.

51. The method of claim 32 or 33, wherein the first information is used to determine a PTRS group pattern at a mapping layer of a PTRS port based on at least one of a scheduled bandwidth, a modulation and coding scheme (MCS), a channel quality, or a codeword.

52. The method of claim 32, 33, or 51, wherein transmitting, by the network device, the first information to the terminal device comprises:
transmitting, by the network device, at least one of a radio resource control (RRC) signaling, a media access control element (MAC CE), or a physical layer signaling, wherein the at least one of the RRC signaling, the MAC CE, or the physical layer signaling carries the first information.

53. A terminal device comprising:
a first transmitting unit configured to transmit a phase-tracking reference signal (PTRS), wherein a number of transmission layers associated with a PTRS port is less than or equal to a number of transmission layers of a discrete Fourier transform-spread-orthogonal frequency division multiplexing (DFT-S-OFDM) waveform physical uplink shared channel (PUSCH), and the number of transmission layers of the DFT-S-OFDM waveform PUSCH is greater than or equal to 2.

54. A network device comprising:
a second receiving unit configured to receive a phase-tracking reference signal (PTRS), wherein a number of transmission layers associated with a PTRS port is less than or equal to a number of transmission layers of a discrete Fourier transform-spread-orthogonal frequency division multiplexing (DFT-S-OFDM) waveform physical uplink shared channel (PUSCH), and the number of transmission layers of the DFT-S-OFDM waveform PUSCH is greater than or equal to 2.

55. A terminal device comprising:

a transceiver;
a memory configured to store computer programs; and
a processor configured to invoke and execute the computer programs stored in the memory and control the transceiver, to cause the terminal device to perform the method of any of claims 1 to 26.

56. A network device comprising:

a transceiver;
a memory configured to store computer programs; and
a processor configured to invoke and execute the computer programs stored in the memory and control the transceiver, to cause the network device to perform the method of any of claims 27 to 52.

57. A chip comprising:
a processor configured to invoke and execute computer programs stored in a memory, to cause a device equipped with the chip to perform the method of any of claims 1 to 26 or 27 to 52.

58. A computer-readable storage medium configured to store computer programs which, when executed by a device, cause the device to perform the method of any of claims 1 to 26 or 27 to 52.

59. A computer program product comprising computer program instructions which are operable with a computer to perform the method of any of claims 1 to 26 or 27 to 52.

60. A computer program being operable with a computer to perform the method of any of claims 1 to 26 or 27 to 52.

**61.** A communication system comprising:

a terminal device configured to perform the method of any of claims 1 to 26; and
a network device configured to perform the method of any of claims 27 to 52.

FIG. 1

S210

**200**

A TERMINAL DEVICE TRANSMITS A PTRS, WHERE A NUMBER OF TRANSMISSION LAYERS ASSOCIATED WITH A PTRS PORT IS LESS THAN OR EQUAL TO A NUMBER OF TRANSMISSION LAYERS OF A DFT-S-OFDM WAVEFORM PUSCH, AND THE NUMBER OF TRANSMISSION LAYERS OF THE DFT-S-OFDM WAVEFORM PUSCH IS GREATER THAN OR EQUAL TO 2

FIG. 2

SUBCARRIERS
OF ONE RB

TRANSMISSION
LAYER 1

TRANSMISSION
LAYER 2

FIG. 3A

SUBCARRIERS
OF ONE RB

TRANSMISSION
LAYER 1

TRANSMISSION
LAYER 2

TRANSMISSION
LAYER 3

TRANSMISSION
LAYER 4

FIG. 3B

SUBCARRIERS
OF ONE RB

TRANSMISSION      TRANSMISSION      TRANSMISSION      TRANSMISSION
LAYER 1          LAYER 2          LAYER 3          LAYER 4

FIG. 3C

SUBCARRIERS
OF ONE RB

TRANSMISSION          TRANSMISSION
LAYER 1               LAYER 2

FIG. 4A

SUBCARRIERS
OF ONE RB

TRANSMISSION     TRANSMISSION     TRANSMISSION     TRANSMISSION
LAYER 1          LAYER 2          LAYER 3          LAYER 4

FIG. 4B

SUBCARRIERS
OF ONE RB

TRANSMISSION
LAYER 1

TRANSMISSION
LAYER 2

TRANSMISSION
LAYER 3

TRANSMISSION
LAYER 4

FIG. 4C

SUBCARRIERS
OF ONE RB

TRANSMISSION
LAYER 1

TRANSMISSION
LAYER 2

FIG. 5A

SUBCARRIERS
OF ONE RB

TRANSMISSION TRANSMISSION
LAYER 1        LAYER 2

TRANSMISSION TRANSMISSION
LAYER 3        LAYER 4

FIG. 5B

SUBCARRIERS
OF ONE RB

TRANSMISSION  TRANSMISSION
LAYER 1      LAYER 2

TRANSMISSION  TRANSMISSION
LAYER 3      LAYER 4

FIG. 5C

SUBCARRIERS OF ONE RB

TRANSMISSION LAYER 1    TRANSMISSION LAYER 2

FIG. 6

SUBCARRIERS
OF ONE RB

TRANSMISSION   TRANSMISSION
LAYER 1        LAYER 2

FIG. 7A

SUBCARRIERS
OF ONE RB

TRANSMISSION
LAYER 1

TRANSMISSION
LAYER 2

FIG. 7B

800

S810

A NETWORK DEVICE RECEIVES A PTRS, WHERE A NUMBER OF TRANSMISSION LAYERS ASSOCIATED WITH A PTRS PORT IS LESS THAN OR EQUAL TO A NUMBER OF TRANSMISSION LAYERS OF A DFT-S-OFDM WAVEFORM PUSCH, AND THE NUMBER OF TRANSMISSION LAYERS OF THE DFT-S-OFDM WAVEFORM PUSCH IS GREATER THAN OR EQUAL TO 2.

FIG. 8

TERMINAL DEVICE

FIRST TRANSMITTING UNIT 910

FIG. 9A

TERMINAL DEVICE

FIRST TRANSMITTING UNIT 910

FIRST DETERMINING UNIT 920

FIRST RECEIVING UNIT 930

FIG. 9B

NETWORK DEVICE

SECOND RECEIVING
UNIT 1010

FIG. 10A

NETWORK DEVICE

SECOND RECEIVING
UNIT 1010

SECOND DETERMINING
UNIT 1020

SECOND TRANSMITTING
UNIT 1030

FIG. 10B

COMMUNICATION DEVICE 1100

MEMORY
1120

PROCESSOR
1110

TRANSCEIVER
1130

FIG. 11

CHIP 1200

INPUT INTERFACE 1230

PROCESSOR 1210

MEMORY 1220

OUTPUT INTERFACE 1240

FIG. 12

COMMUNICATION SYSTEM 1300

TERMINAL DEVICE — 1310

NETWORK DEVICE — 1320

FIG. 13

## INTERNATIONAL SEARCH REPORT

| International application No. |
| --- |
| **PCT/CN2023/105946** |

| A. | CLASSIFICATION OF SUBJECT MATTER |
| --- | --- |

H04L5/00(2006.01)i;  H04W72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, 3GPP: 位跟踪参考信号, 端口, 传输, 层, 物理上行共享信道, 映射, PTRS, DFT-S-OFDM, PUSCH, layer, port, mapping

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | WO 2022036529 A1 (HUAWEI TECHNOLOGIES CO., LTD.) 24 February 2022 (2022-02-24)<br>description, page 1, last paragraph to page 5, paragraph 5, page 12, the second-to-last paragraph to page 15, paragraph 4 | | 1-61 |
| A | CN 108989010 A (HUAWEI TECHNOLOGIES CO., LTD.) 11 December 2018 (2018-12-11)<br>entire document | | 1-61 |
| A | CN 110034904 A (VIVO COMMUNICATION TECHNOLOGY CO., LTD.) 19 July 2019 (2019-07-19)<br>entire document | | 1-61 |
| A | US 2023035992 A1 (APPLE INC.) 02 February 2023 (2023-02-02)<br>entire document | | 1-61 |
| A | NOKIA et al. "Required changes to NR using existing DL/UL NR waveform"<br>*3GPP TSG RAN WG1 #103. R1-2007926*, 13 November 2020 (2020-11-13),<br>entire document | | 1-61 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 December 2023** | **14 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/105946**

| Patent document cited in search report | | | Publication date (day/month/year) | Patent family member(s) | | | Publication date (day/month/year) |
|---|---|---|---|---|---|---|---|
| WO | 2022036529 | A1 | 24 February 2022 | EP | 4187830 | A1 | 31 May 2023 |
| | | | | US | 2023198715 | A1 | 22 June 2023 |
| | | | | CN | 15804038 | A | 14 March 2023 |
| CN | 108989010 | A | 11 December 2018 | US | 2020119882 | A1 | 16 April 2020 |
| | | | | EP | 3641250 | A1 | 22 April 2020 |
| | | | | WO | 2018228458 | A1 | 20 December 2018 |
| | | | | CA | 3066855 | A1 | 20 December 2018 |
| | | | | JP | 2020523892 | A | 06 August 2020 |
| | | | | EP | 3985910 | A1 | 20 April 2022 |
| | | | | CN | 109039965 | A | 18 December 2018 |
| | | | | CN | 109150777 | A | 04 January 2019 |
| CN | 110034904 | A | 19 July 2019 | US | 2021075570 | A1 | 11 March 2021 |
| | | | | WO | 019137225 | A1 | 18 July 2019 |
| US | 2023035992 | A1 | 02 February 2023 | WO | 2023004646 | A1 | 02 February 2023 |
| | | | | CN | 116018761 | A | 25 April 2023 |

Form PCT/ISA/210 (patent family annex) (July 2022)